(19) Europäisches Patentamt
European Patent Office
Office européen des brevets

(11) **EP 4 129 945 A1**

(12) **EUROPEAN PATENT APPLICATION**
published in accordance with Art. 153(4) EPC

(43) Date of publication:
**08.02.2023 Bulletin 2023/06**

(51) International Patent Classification (IPC):
**C03C 27/12** (1968.09)   **B32B 27/30** (1968.09)
**C09J 11/04** (1990.01)   **C09J 129/14** (1990.01)

(21) Application number: **21781299.9**

(22) Date of filing: **30.03.2021**

(52) Cooperative Patent Classification (CPC):
**B32B 17/00; B32B 27/30; C09J 11/04;
C09J 129/14**

(86) International application number:
**PCT/JP2021/013701**

(87) International publication number:
**WO 2021/201040 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2020 JP 2020062737**

(71) Applicant: SEKISUI CHEMICAL CO., LTD.
**Osaka-shi
Osaka
530-8565 (JP)**

(72) Inventors:
• **NAKAYAMA, Kazuhiko**
**Koka-shi, Shiga 528-8585 (JP)**
• **MASUDA, Hiroki**
**Mishima-gun, Osaka 618-0021 (JP)**

(74) Representative: **Ter Meer Steinmeister & Partner
Patentanwälte mbB
Nymphenburger Straße 4
80335 München (DE)**

(54) **INTERLAYER FILM FOR LAMINATED GLASS, AND LAMINATED GLASS**

(57)     The interlayer film for laminated glass according to the present invention includes at least one graphene-based material selected from the group consisting of graphene and graphite.

# Fig. 1

**Description**

Technical Field

The present invention relates to an interlayer film for laminated glass, and laminated glass having an interlayer film for laminated glass.

Background Art

Laminated glass is widely used for window glass for various conveyances such as automobiles and window glass for buildings and the like because even if laminated glass is subjected to an external impact and broken, pieces of the broken glass rarely scatter and are safe. As the laminated glass, laminated glass in which an interlayer film for laminated glass including a resin component such as a polyvinyl acetal resin is interposed between a pair of glasses and integrated is widely known.

It is demanded that an interlayer film for laminated glass be colored black in order to provide light blocking properties, antiglare properties, design ability, and heat shielding properties to window glass. In order to color the interlayer film for laminated glass black, generally carbon black is often used (see, for example, PTL1).

Citation List

Patent Literature

PTL1: JP 2012-218972 A

Summary of Invention

Technical Problem

However, carbon black has insufficient infrared cutting performance, and it is difficult to enhance the heat shielding properties of a laminated glass interlayer film with carbon black alone. Further, carbon black is not achromatic black and is reddish, and therefore there is also room for improvement in terms of designability.

Accordingly, it is an object of the present invention to provide an interlayer film for laminated glass in which the heat shielding performance and the designability can be easily enhanced.

Solution to Problem

As a result of diligent studies, the present inventors have found that the object can be achieved by using graphene or graphite in an interlayer film for laminated glass, and completed the present invention below.

Specifically, the present invention provides the following [1] to [11].

[1] An interlayer film for laminated glass including at least one graphene-based material selected from the group consisting of graphene and graphite.

[2] The interlayer film for laminated glass according to the above [1], wherein an average particle diameter of the graphene-based material is 40 μm or less.

[3] The interlayer film for laminated glass according to the above [1] or [2], wherein a thickness of the graphene-based material is 1 μm or less.

[4] The interlayer film for laminated glass according to any one of the above [1] to [3], wherein a degree of oxidation of the graphene-based material is 50% or less.

[5] The interlayer film for laminated glass according to any one of the above [1] to [4], wherein a content of the graphene-based material is 0.0005% by mass or more and 1% by mass or less.

[6] The interlayer film for laminated glass according to any one of the above [1] to [5], including a colored resin layer including a resin and the graphene-based material.

[7] The interlayer film for laminated glass according to the above [6], wherein the colored resin layer includes a polyvinyl acetal resin as the resin.

[8] The interlayer film for laminated glass according to the above [6] or [7], including a first resin layer, a second resin layer provided on one surface side of the first resin layer, and a third resin layer provided on the other surface side of the first resin layer, wherein
the first resin layer is the colored resin layer.

[9] The interlayer film for laminated glass according to any one of the above [1] to [8], wherein total solar transmittance (Tts) and visible light transmittance (Tv) measured for laminated glass satisfy the following formula (1), the laminated glass being made by adhering two clear glass plates, each having a thickness of 2.5 mm and having a visible light transmittance of 90.5%, a solar transmittance of 87.3%, and a solar reflectance of 8.3% as measured in accordance with JIS R 3106: 1998, to each other via the interlayer film for laminated glass disposed between the two clear glass plates:

$$(Tts - 31)/Tv < 0.6 \quad (1)$$

[10] The interlayer film for laminated glass according to any one of the above [1] to [9], wherein saturation (C) and visible light transmittance (Tv) measured for laminated glass satisfy the following formula (2), the laminated glass being made by adhering two clear glass plates, each having a thickness of 2.5 mm and having a visible light transmittance of 90.5% as measured in accordance with JIS R 3106: 1998 and a saturation of 0.6 as measured in accordance with JIS Z 8781, to each other via the interlayer film for laminated glass disposed between the two clear glass plates:

$$(C - 16)/Tv < -0.15 \quad (2)$$

[11] The interlayer film for laminated glass according to any one of the above [1] to [10], wherein the average particle diameter of the graphene-based material is 0.001 $\mu$m or more and 4 $\mu$m or less.
[12] The interlayer film for laminated glass according to any one of the above [1] to [11], wherein the average particle diameter of the graphene-based material is 1 $\mu$m or less.
[13] The interlayer film for laminated glass according to any one of the above [1] to [12], wherein the thickness of the graphene-based material is 0.001 $\mu$m or more and 0.1 $\mu$m or less.
[14] The interlayer film for laminated glass according to any one of the above [1] to [13], wherein the thickness of the graphene-based material is 0.01 $\mu$m or less.
[15] The interlayer film for laminated glass according to any one of the above [1] to [14], wherein the degree of oxidation of the graphene-based material is 0.01% or more and 30% or less.
[16] The interlayer film for laminated glass according to any one of the above [1] to [15], wherein the degree of oxidation of the graphene-based material is 1% or less.
[17] The interlayer film for laminated glass according to any one of the above [1] to [16], wherein the content of the graphene-based material is 0.005% by mass or more and 0.3% by mass or less, and the graphene-based material is contained in an entire region of the interlayer film for laminated glass.
[18] The interlayer film for laminated glass according to any one of the above [1] to [17], wherein the graphene-based material is contained in a partial region of the interlayer film for laminated glass.
[19] The interlayer film for laminated glass according to any one of the above [1] to [17], wherein the graphene-based material is contained in the entire region of the interlayer film for laminated glass.
[20] The interlayer film for laminated glass according to any one of the above [1] to [19], including the colored resin layer including the resin and the graphene-based material, and a colorant other than a graphene-based material is further contained in the colored resin layer.
[21] The interlayer film for laminated glass according to any one of the above [1] to [20], including the colored resin layer including the resin and the graphene-based material, and a content of the graphene-based material in the colored resin layer is 0.0005% by mass or more and 5% by mass or less.
[22] Laminated glass including the interlayer film for laminated glass according to any one of the above [1] to [21] and two glass plates, wherein
the interlayer film for laminated glass is disposed between the two glass plates.

Advantageous Effects of Invention

According to the interlayer film for laminated glass according to the present invention, the heat shielding performance and the designability can be easily enhanced.

Brief Description of Drawings

[Fig. 1] Fig. 1 is a cross-sectional view of an interlayer film for laminated glass according to a first embodiment.
[Fig. 2] Fig. 2 is a cross-sectional view of an interlayer film for laminated glass according to a second embodiment.
[Fig. 3] Fig. 3 is a cross-sectional view of an interlayer film for laminated glass according to a third embodiment.
[Fig. 4] Fig. 4 is a cross-sectional view of an interlayer film for laminated glass according to a fourth embodiment.
[Fig. 5] Fig. 5 is a cross-sectional view of an interlayer film for laminated glass according to a fifth embodiment.
[Fig. 6] Fig. 6 is a cross-sectional view of an interlayer film for laminated glass according to a sixth embodiment.
[Fig. 7] Fig. 7 is a cross-sectional view of an interlayer film for laminated glass according to a seventh embodiment.
[Fig. 8] Fig. 8 is a graph showing the relationship between the visible light transmittance (Tv) and total solar transmittance (Tts) of Examples and Comparative Examples. The region below the solid line shown by (1) is a region that satisfies the requirement of formula (1). The region below the dotted line shown by (1-1) is a region that satisfies the requirement of formula (1-1). The same applies to (1-2) and (1-3).
[Fig. 9] Fig. 9 is a graph showing the relationship between the visible light transmittance (Tv) and saturation (C) of the Examples and the Comparative Examples. The region below the solid line shown by (2) is a region that satisfies the requirement of formula (2). The region below the dotted line shown by (2-1) is a region that satisfies the requirement of formula (2-1). The same applies to (2-2).

Description of Embodiments

<Interlayer Film for Laminated Glass>

The present invention will be described in detail below using embodiments.
The interlayer film for laminated glass (hereinafter sometimes simply referred to as an "interlayer film") according to the present invention includes at least one graphene-based material selected from the group consisting of graphene and graphite.

[Graphene-Based Material]

The graphene-based material used in the present invention is graphene or graphite. Graphene or graphite is achromatic black. Therefore, when graphene or graphite is not used in combination with another colorant or the like, the interlayer film of the present invention can be colored black having low saturation, and when graphene or graphite is used in combination with another colorant, the tint of the colorant used in combination can be easily reflected in the interlayer film. Therefore, the designability may be enhanced. In addition, graphene or graphite can increase infrared absorptance, and therefore the heat shielding properties of the interlayer film are also easily made good.
Graphene generally refers to a material having a single layer of a hexagonal lattice structure including carbon, and graphite refers to a material in which a plurality of layers of hexagonal lattice structures are laminated. However, even a material in which a plurality of layers of hexagonal lattice structures are laminated may be referred to as graphene when its number of laminated layers is small (for example, 20 layers or less), and the terms "graphene" and "graphite" are not necessarily clearly distinguished. Therefore, graphene and graphite may be collectively described herein as graphene-based materials.
The average particle diameter of the graphene-based material is, for example, 40 $\mu$m or less. By setting the average particle diameter at 40 $\mu$m or less, the dispersing ability in the resin constituting the interlayer film can be made good, and light scattering in the graphene-based material can be suppressed, and laminated glass can be made less likely to cloud. From the viewpoint of making the interlayer film and laminated glass even less likely to cloud, the average particle diameter of the graphene-based material is suitable to be as small as possible. The average particle diameter of the graphene-based material is preferably 4 $\mu$m or less, more preferably 1 $\mu$m or less, further preferably 0.5 $\mu$m or less, still further preferably 0.1 $\mu$m or less, still further preferably 0.05 $\mu$m or less, and particularly preferably 0.025 $\mu$m or less. The lower limit of the average particle diameter of the graphene-based material is not particularly limited but is, for example, 0.001 $\mu$m, from the viewpoint of the ease of production.
When the graphene-based material has thin thickness, scattering in the edge portion can be suppressed, and laminated glass is less likely to cloud. When the graphene-based material has a small number of layers and thin thickness, it is less likely to be tinged with metallic gloss, and transparency is also easily ensured. Therefore, the thickness of the graphene is preferably a certain value or less.
From such viewpoints, the thickness of the graphene material is, for example, 1 $\mu$m or less, preferably 0.1 $\mu$m or less, more preferably 0.05 $\mu$m or less, further preferably 0.01 $\mu$m or less, and further preferably 0.003 $\mu$m or less. When the graphene-based material has a thickness of 0.001 $\mu$m or more, the handling properties improve.
When the graphene-based material has thin thickness, aggregation occurs easily, and the folding of the graphene, and the like also occur, which may cause clouding in laminated glass or the like. But the occurrence of clouding can be prevented by suitably dispersing the graphene-based material in the resin.

The shape of the graphene-based material is not particularly limited and may be any of a spherical shape, a plate shape, and the like but is preferably a plate shape in order to decrease the thickness as described above.

The average particle diameter and thickness of the graphene are each the arithmetic mean value of 30 points measured from a photograph taken by a transmission electron microscope, and specific measurement methods are as described in Examples.

The graphene may be graphene oxide or reduced graphene. Graphene oxide has oxygen-based functional groups such as oxygen and a carboxylic acid on the surface, but reduced graphene has no oxygen-based functional groups on the surface.

For graphene, as the degree of oxidation becomes lower, and the degree of reduction becomes higher, the visible light transmittance becomes higher, and the infrared transmittance becomes lower, and therefore good heat shielding performance is exhibited. In addition, as the degree of oxidation becomes lower, the color tone when graphene is added to the interlayer film becomes closer to an achromatic color from strongly reddish black, and therefore the designability is also excellent. The same applies to graphite.

The degree of oxidation of the graphene-based material is preferably 50% or less, more preferably 30% or less, further preferably 10% or less, and still further preferably 1% or less from the above viewpoints.

The degree of oxidation in the graphene-based material is not particularly limited but may be, for example, 0.01% or more or 0.1% or more. For the graphene-based material, when the degree of oxidation decreases, the number of functional groups decreases. But when the graphene-based material has a degree of oxidation of a certain value or more as described above, a certain number of functional groups can be ensured, and the dispersing ability in the interlayer film easily becomes good.

The degree of oxidation of the graphene-based material can be measured from the weight loss measured by TG-TDA under a nitrogen atmosphere and under an oxygen atmosphere.

As the content of the graphene-based material in the interlayer film becomes lower, an interlayer film in which clouding is less likely to occur is obtained. In addition, the visible light transmittance (Tv) described later can also be adjusted by the content. From such viewpoints, the content of the graphene-based material in the interlayer film is preferably 5% by mass or less, more preferably 1% by mass or less, further preferably 0.3% by mass or less, still further preferably 0.1% by mass or less, and particularly preferably 0.05% by mass or less.

From the viewpoint of also enhancing the designability while enhancing the red light absorbency to make the heat shielding properties good, the content of the graphene-based material in the interlayer film is preferably 0.0005% by mass or more, more preferably 0.005% by mass or more.

In either of the case where the interlayer film is a single-layer structure and the case where the interlayer film is a multilayer structure, the content of the graphene-based material in the interlayer film means the content of the graphene-based material based on the entire single-layer structure or multilayer structure (that is, in the total thickness also including the thickness of a resin layer containing no graphene-based material when the interlayer film includes such a resin layer). When the interlayer film has a non-colored region and a colored region as described later, the content of the graphene-based material in the interlayer film means the content of the graphene-based material in the colored region. Further, when the content changes from position to position, such as when the colored region has a gradation region, the content of the graphene-based material in the interlayer film is the content of the graphene-based material at the position where the content of the graphene-based material is highest.

The content of graphene in the interlayer film can be measured from the weight loss measured by TG-TDA or the like.

The method for producing the graphene-based material is not particularly limited, but, for example, graphene oxide can be produced by the Hammers method. Reduced graphene can be obtained by reducing graphene oxide by a known method. Graphite can be obtained by subjecting graphite, for example, natural graphite, artificial graphite, or expanded graphite, to exfoliation treatment.

The adjustment of the average particle diameter of the graphene-based material may be performed, for example, by fining graphene or graphite. For example, the average particle diameter can be decreased by mechanically crushing graphene or graphite by a grinding machine. The thickness can be decreased by dispersing graphene or graphite in a suitable solvent and then irradiating the graphene or graphite with ultrasonic waves to cause delamination.

Whether the graphene-based material is contained in the interlayer film or not can be sensed by an XRD apparatus. Specifically, the interlayer film is placed on a nonreflective Si base, and measurement is performed by an XRD apparatus ("SmartLab" manufactured by Rigaku). For the measurement conditions, the X-ray light source is a Cu Kα ray ($\lambda$ = 0.154 nm), the tube voltage is 9 kW (45 kV × 200 mA), the optical system is a focusing method (D/TeX), the measurement range is 5° to 100°, the measurement step is 0.02°, and the operation speed is 40 deg/min.

Then, the diffraction intensity at $2\theta$ is calculated from the measurement results, and when the interlayer film has a peak at any of 26.5° ± 0.3, 54.0° ± 0.3, and 77.6° ± 0.3°, it can be determined that the interlayer film contains the graphene-based material. In the diffraction peak identification/qualitative analysis, the utilization of the crystal structure database of ICDD (JCPDS) or the like is effective.

The presence or absence of the graphene-based material can also be confirmed by observation by a microscope such as a transmission electron microscope. Specifically, this can be identified by cutting out an ultrathin piece from the interlayer film by a microtome method and observing the ultrathin piece under the condition of an acceleration voltage of 200 kV using a transmission electron microscope ("JEM-2100", manufactured by JEOL Ltd.), to confirm that the cross sections of the flat plate-shaped particles contained in the ultrathin piece have a laminated structure of carbon hexagonal networks.

[Resin Layer]

The interlayer film of the present invention includes one or more resin layers, and each resin layer contains a resin. For the resin used in the resin layer, a thermoplastic resin is preferred. By containing the thermoplastic resin, the resin layer easily serves the function as an adhesive layer, and the adhesiveness to glass plates is good.

In the interlayer film of the present invention, at least one of the plurality of resin layers includes the graphene-based material in addition to the resin. As used herein, a resin layer containing a graphene-based material is referred to as a "colored resin layer", and a resin layer colored with only a material other than a "graphene-based material" is not taken as a "colored resin layer". In the colored resin layer, the graphene-based material is dispersed in the resin.

For the content of the graphene-based material in the colored resin layer, the content of the graphene-based material in the interlayer film may be within the above range, and the content of the graphene-based material in the colored resin layer is preferably 5% by mass or less, more preferably 1% by mass or less, further preferably 0.5% by mass or less, still further preferably 0.2% by mass or less, and particularly preferably 0.1% by mass or less. The content of the graphene-based material in the colored resin layer is preferably 0.0005% by mass or more, more preferably 0.005% by mass or more.

The thermoplastic resin in each resin layer is not particularly limited, and examples thereof include a polyvinyl acetal resin, an ethylene-vinyl acetate copolymer resin, an ionomer resin, a polyurethane resin, a thermoplastic elastomer, an acrylic resin, an acrylic-vinyl acetate copolymer resin, a polyvinyl alcohol resin, a polyolefin resin, a polyvinyl acetate resin, and a polystyrene resin. By using these resins, adhesiveness to glass plates is easily ensured.

In the interlayer film of the present invention, one thermoplastic resin may be used singly, or two or more thermoplastic resins may be used in combination. Of these, at least one selected from the group consisting of a polyvinyl acetal resin and an ethylene-vinyl acetate copolymer resin is preferred, and a polyvinyl acetal resin is more preferred in terms of exhibiting excellent adhesiveness to glass, particularly when it is used in combination with a plasticizer. Therefore, also for the resin in the colored resin layer, at least one selected from the group consisting of a polyvinyl acetal resin and an ethylene-vinyl acetate copolymer resin is preferred, and a polyvinyl acetal resin is more preferred.

When the interlayer film has a plurality of resin layers, the resins constituting the resin layers may be appropriately selected from the resins listed above. The resins constituting the resin layers may be different resins from each other but are preferably the same as each other.

Therefore, when the interlayer film has a plurality of resin layers, the resins constituting the resin layers are each preferably a polyvinyl acetal resin or an ethylene-vinyl acetate copolymer resin, more preferably a polyvinyl acetal resin.

(Polyvinyl Acetal Resin)

The polyvinyl acetal resin is not particularly limited as long as it is a polyvinyl acetal resin obtained by acetalizing polyvinyl alcohol (PVA) with an aldehyde.

The aldehyde is not particularly limited, but generally, an aldehyde having 1 to 10 carbon atoms is preferably used. The aldehyde having 1 to 10 carbon atoms is not particularly limited, and examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. These aldehydes may be used singly, or two or more of these aldehydes may be used in combination.

Among the above, n-butyraldehyde, n-hexylaldehyde, and n-valeraldehyde are preferred, and n-butyraldehyde is more preferred. Therefore, for the polyvinyl acetal resin, a polyvinyl butyral resin is preferred.

Polyvinyl alcohol (PVA) is obtained, for example, by saponifying a polyvinyl ester such as polyvinyl acetate. The degree of saponification of polyvinyl alcohol is generally 70 to 99.9 mol %. One polyvinyl acetal resin may be used singly, or two or more polyvinyl acetal resins may be used in combination.

The average degree of polymerization of PVA is preferably 200 or more, more preferably 500 or more, further preferably 1000 or more, and still further preferably 1500 or more. When the average degree of polymerization is equal to or more than the lower limits, the penetration resistance of laminated glass increases. The average degree of polymerization of PVA is preferably 5000 or less, more preferably 4000 or less, further preferably 3500 or less, and still further preferably 2500 or less.

The average degree of polymerization of polyvinyl alcohol is obtained by a method in accordance with JIS K6726 "Testing methods for polyvinyl alcohol".

The amount of hydroxyl groups in the polyvinyl acetal resin is preferably 15 mol % or more and preferably 38 mol % or less. By setting the amount of hydroxyl groups at 15 mol % or more, the adhesiveness easily becomes good, and the penetration resistance of laminated glass, and the like are easily made good. By setting the amount of hydroxyl groups at 38 mol % or less, laminated glass is prevented from being too hard. The amount of hydroxyl groups is more preferably 20 mol % or more, further preferably 25 mol % or more, from the viewpoint of adhesiveness to glass plates, and the like. The amount of hydroxyl groups is more preferably 35% or less, further preferably 33 mol % or less.

Also when a polyvinyl butyral resin is used as the polyvinyl acetal resin, the amount of hydroxyl groups is 15 mol % or more and preferably 38 mol % or less, and more preferably 20 mol % or more, further preferably 25 mol % or more, and more preferably 35% mol or less, further preferably 33 mol % or less, from the same viewpoints.

The amount of hydroxyl groups in the polyvinyl acetal resin is the value, expressed in percentage, of the mole fraction obtained by dividing the amount of ethylene groups to which hydroxyl groups are bonded, by the amount of all ethylene groups in the main chain. The amount of ethylene groups to which hydroxyl groups are bonded can be measured, for example, in accordance with JIS K6728 "Testing methods for polyvinyl butyral".

The degree of acetalization of the polyvinyl acetal resin is preferably 47 mol % or more and preferably 85 mol % or less. The degree of acetalization is more preferably 55 mol % or more, further preferably 60 mol % or more, and more preferably 80 mol % or less, further preferably 75 mol % or less.

The degree of acetalization means the degree of butyralization when the acetal group is a butyral group, and the polyvinyl acetal resin (A) is a polyvinyl butyral resin.

The degree of acetalization is the value, expressed in percentage, of the mole fraction obtained by subtracting the amount of ethylene groups to which hydroxyl groups are bonded and the amount of ethylene groups to which acetyl groups are bonded from the amount of all ethylene groups in the main chain and dividing the obtained value by the amount of all ethylene groups in the main chain. The degree of acetalization (degree of butyralization) should be calculated, for example, from the results measured by a method in accordance with JIS K6728 "Testing methods for polyvinyl butyral".

The degree of acetylation of the polyvinyl acetal resin is preferably 30 mol % or less, more preferably 20 mol % or less, further preferably 10 mol % or less, and still further preferably 2 mol % or less. When the degree of acetylation is equal to or less than the upper limits, the moisture resistance of the interlayer film and laminated glass increases. The degree of acetylation is not particularly limited but is preferably 0.01 mol % or more, more preferably 0.1 mol % or more.

The degree of acetylation is the value, expressed in percentage, of the mole fraction obtained by dividing the amount of ethylene groups to which acetyl groups are bonded, by the amount of all ethylene groups in the main chain. The amount of ethylene groups to which acetyl groups are bonded can be measured, for example, in accordance with JIS K6728 "Testing methods for polyvinyl butyral".

(Ethylene-Vinyl Acetate Copolymer Resin)

The ethylene-vinyl acetate copolymer resin may be a non-crosslinked ethylene-vinyl acetate copolymer resin and may be a high temperature crosslinked ethylene-vinyl acetate copolymer resin. As the ethylene-vinyl acetate copolymer resin, an ethylene-vinyl acetate modified product resin such as an ethylene-vinyl acetate copolymer saponified product or a hydrolysate of ethylene-vinyl acetate can also be used.

The ethylene-vinyl acetate copolymer resin preferably has a vinyl acetate content of 10 to 50% by mass, more preferably 20 to 40% by mass, as measured in accordance with JIS K 6730 "Testing methods for ethylene/vinyl acetate copolymer materials" or JIS K 6924-2: 1997. By setting the vinyl acetate content at these lower limit values or more, the adhesiveness to glass increases, and the penetration resistance of laminated glass easily becomes good. By setting the vinyl acetate content at these upper limit values or less, the breaking strength of the interlayer film increases, and the impact resistance of laminated glass is good.

(Ionomer Resin)

The ionomer resin is not particularly limited, and various ionomer resins can be used. Specific examples include an ethylene-based ionomer, a styrene-based ionomer, a perfluorocarbon-based ionomer, a telechelic ionomer, and a polyurethane ionomer. Among these, an ethylene-based ionomer is preferred in terms of good mechanical strength, durability, transparency, and the like of laminated glass and in terms of excellent adhesiveness to glass.

As the ethylene-based ionomer, an ionomer of an ethylene-unsaturated carboxylic acid copolymer is preferably used because it is excellent in transparency and toughness. The ethylene-unsaturated carboxylic acid copolymer is a copolymer having at least a constituent unit derived from ethylene and a constituent unit derived from an unsaturated carboxylic acid and may have a constituent unit derived from another monomer.

Examples of the unsaturated carboxylic acid include acrylic acid, methacrylic acid, and maleic acid. Acrylic acid and methacrylic acid are preferred, and methacrylic acid is particularly preferred. Examples of another monomer include an acrylate, a methacrylate, and 1-butene.

The ethylene-unsaturated carboxylic acid copolymer preferably has 75 to 99 mol % of the constituent unit derived from ethylene and preferably has 1 to 25 mol % of the constituent unit derived from the unsaturated carboxylic acid, based on 100 mol % of all constituent units of the copolymer.

The ionomer of the ethylene-unsaturated carboxylic acid copolymer is an ionomer resin obtained by neutralizing or crosslinking at least some of the carboxyl groups of the ethylene-unsaturated carboxylic acid copolymer with metal ions, and the degree of neutralization of the carboxyl groups is usually 1 to 90%, preferably 5 to 85%.

Examples of the ion source for the ionomer resin include alkali metals such as lithium, sodium, potassium, rubidium, and cesium, and polyvalent metals such as magnesium, calcium, and zinc. Sodium and zinc are preferred.

The method for producing the ionomer resin is not particularly limited, and the ionomer resin can be produced by a conventionally known production method. For example, when an ionomer of an ethylene-unsaturated carboxylic acid copolymer is used as the ionomer resin, for example, ethylene and an unsaturated carboxylic acid are subjected to radical copolymerization under high temperature and high pressure to produce an ethylene-unsaturated carboxylic acid copolymer. Then, the ethylene-unsaturated carboxylic acid copolymer is reacted with a metal compound including the ion source, and thus an ionomer of the ethylene-unsaturated carboxylic acid copolymer can be produced.

(Polyurethane Resin)

Examples of the polyurethane resin include a polyurethane obtained by reacting an isocyanate compound with a diol compound, and a polyurethane obtained by reacting an isocyanate compound, a diol compound, and further a chain extender such as a polyamine. The polyurethane resin may contain a sulfur atom. In that case, part or all of the diol may be selected from the group consisting of a polythiol and a sulfur-containing polyol. The polyurethane resin can make the adhesiveness to organic glass good. Therefore, the polyurethane resin is preferably used when the glass plates are organic glass.

(Thermoplastic Elastomer)

Examples of the thermoplastic elastomer include a styrene-based thermoplastic elastomer and an aliphatic polyolefin. The styrene-based thermoplastic elastomer is not particularly limited, and a known one can be used. The styrene-based thermoplastic elastomer generally has a styrene monomer polymer block that is a hard segment, and a conjugated diene compound polymer block or its hydrogenated block that is a soft segment. Specific examples of the styrene-based thermoplastic elastomer include a styrene-isoprene diblock copolymer, a styrene-butadiene diblock copolymer, a styrene-isoprene-styrene triblock copolymer, a styrene-butadiene/isoprene-styrene triblock copolymer, a styrene-butadiene-styrene triblock copolymer, and their hydrogenated products.

The aliphatic polyolefin may be a saturated aliphatic polyolefin or an unsaturated aliphatic polyolefin. The aliphatic polyolefin may be a polyolefin including a chain olefin as a monomer, or a polyolefin including a cyclic olefin as a monomer. From the viewpoint of effectively enhancing the storage stability and sound insulation properties of the interlayer film, the aliphatic polyolefin is preferably a saturated aliphatic polyolefin.

Examples of the material of the aliphatic polyolefin include ethylene, propylene, 1-butene, trans-2-butene, cis-2-butene, 1-pentene, trans-2-pentene, cis-2-pentene, 1-hexene, trans-2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4-nonene, cis-4-nonene, 1-decene, trans-2-decene, cis-2-decene, trans-3-decene, cis-3-decene, trans-4-decene, cis-4-decene, trans-5-decene, cis-5-decene, 4-methyl-1-pentene, and vinylcyclohexane.

(Plasticizer)

When each resin layer in the interlayer film contains a thermoplastic resin, it may further contain a plasticizer. By containing the plasticizer, the interlayer film is flexible and, as a result, improves the flexibility of laminated glass and also improves the penetration resistance. Further, it is also possible to exhibit high adhesiveness to glass plates. The plasticizer is particularly effective when contained when a polyvinyl acetal resin is used as the thermoplastic resin. The colored resin layer also preferably contains a plasticizer, more preferably a polyvinyl acetal resin and a plasticizer.

Examples of the plasticizer include organic ester plasticizers such as a monobasic organic acid ester and a polybasic organic acid ester, and phosphorus plasticizers such as an organic phosphate plasticizer and an organic phosphite plasticizer. Among them, organic ester plasticizers are preferred.

Examples of the organic ester plasticizers include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, dihexyl adipate, dioctyl adipate, hexylcyclohexyl adipate, diisononyl adipate, heptylnonyl adipate, dibutyl sebacate, an oil-modified sebacic alkyd, a mixture of a phosphate and an adipate, and a mixed adipate. Examples of the mixed adipate include an adipate made from two or more alcohols selected from the group consisting of an alkyl alcohol having 4 to 9 carbon atoms and a cyclic alcohol having 4 to 9 carbon atoms.

Among the plasticizers, triethylene glycol-di-2-ethylhexanoate (3GO) is particularly preferably used.

The content of the plasticizer in each resin layer of the interlayer film is not particularly limited but is preferably 10 parts by mass or more and preferably 100 parts by mass or less based on 100 parts by mass of the thermoplastic resin constituting each resin layer. When the content of the plasticizer is 10 parts by mass or more, laminated glass is moderately flexible, and the penetration resistance and the like are good. When the content of the plasticizer is 100 parts by mass or less, the separation of the plasticizer from the interlayer film is prevented. The content of the plasticizer is more preferably 20 parts by mass or more, further preferably 30 parts by mass or more, and further preferably 35 parts by mass or more, and more preferably 70 parts by mass or less, further preferably 63 parts by mass or less.

In each resin layer constituting the interlayer film, the resin or the resin and the plasticizer are main components, and in each resin layer, the total amount of the thermoplastic resin and the plasticizer is usually 70% by mass or more, preferably 80% by mass or more, and further preferably 90% by mass or more and less than 100% by mass based on the total amount of each resin layer. By setting the total amount at less than 100% by mass, each resin layer can contain an additive such as the graphene-based material.

(Other Components)

The interlayer film of the present invention may contain at least any one of a heat shielding agent other than a graphene-based material, and a colorant. These may be contained in any of the resin layers constituting the interlayer film. The heat shielding agent other than a graphene-based material, and the colorant are dispersed in the resin in the resin layer.

Examples of the heat shielding agent other than a graphene-based material include heat shielding particles. The heat shielding particles include an inorganic material, and specific examples thereof include metal oxide particles and particles other than metal oxide particles, such as lanthanum hexaboride (LaB6) particles. Examples of the metal oxide particles include tin oxide particles such as aluminum-doped tin oxide particles, indium-doped tin oxide particles, and antimony-doped tin oxide particles (ATO particles), zinc oxide particles such as gallium-doped zinc oxide particles (GZO particles), indium-doped zinc oxide particles (IZO particles), aluminum-doped zinc oxide particles (AZO particles), tin-doped zinc oxide particles, and silicon-doped zinc oxide particles, titanium oxide particles such as niobium-doped titanium oxide particles, indium oxide particles such as tin-doped indium oxide particles (ITO particles), and tungsten oxide particles such as sodium-doped tungsten oxide particles, cesium-doped tungsten oxide particles (CWO particles), thallium-doped tungsten oxide particles, and rubidium-doped tungsten oxide particles. Heat shielding particles other than these may be used.

Examples of the heat shielding agent also include a heat shielding compound. The heat shielding compound is an organic material or an organic-inorganic composite material that can absorb infrared rays, and is also referred to as a near-infrared absorbent. The near-infrared absorbent has an absorption maximum in the near-infrared region, and the absorption maximum shows maximum absorption among absorption maximums present in the region of wavelengths of 380 nm to 2500 nm and specifically has maximum absorption in the wavelength region of 720 nm or more, preferably 750 nm or more and 2000 nm or less.

Examples of the heat shielding compound include one or two or more compounds selected from the group consisting of a phthalocyanine compound, a naphthalocyanine compound, and an anthracyanine compound.

The phthalocyanine compound is phthalocyanine or a phthalocyanine derivative having a phthalocyanine skeleton, and preferably a metal atom is contained in these. The naphthalocyanine compound is naphthalocyanine or a naphthalocyanine derivative having a naphthalocyanine skeleton, and preferably a metal atom is contained in these. The anthracyanine compound is anthracyanine or an anthracyanine derivative having an anthracyanine skeleton, and preferably a metal atom is contained in these.

In these compounds, the metal atom is the central metal of the naphthalocyanine skeleton, the naphthalocyanine skeleton, or the anthracyanine skeleton.

One heat shielding material may be used singly, or two or more heat shielding materials may be used in combination.

The colorant used is not particularly limited, and coloring matter conventionally blended into interlayer films can be used, and coloring matter such as blue, yellow, red, green, purple, or white coloring matter can be used. For the coloring matter, a pigment, a dye, or the like can be used.

By using the colorant, the interlayer film can be colored the desired color. By containing the graphene-based material, the interlayer film can be made black having low saturation, as described above, and by further containing a colorant other than a black colorant, the interlayer film can be colored black having the desired tint according to the colorant. The colorant maybe contained, for example, in the resin layer containing the graphene-based material, that is, the colored resin layer, which is not particularly limited.

Examples of the pigment include a phthalocyanine-based pigment such as a copper phthalocyanine pigment such as Pigment Blue, or a cobalt phthalocyanine pigment, an anthraquinone-based pigment, a perylene pigment, a diketopyrrolopyrrole-based pigment, a quinacridone-based pigment, a perinone-based pigment, a thioindigo-based pigment, an isoindoline-based pigment, an isoindolinone-based pigment, a quinophthalone-based pigment, an indanthrene-based pigment, a dioxazine-based pigment, a pyrrocoline-based pigment, a fluorubine-based pigment, an azo pigment, a titanium oxide-based pigment a calcium carbonate-based pigment, a metal oxide-based pigment, a Ni complex-based pigment, and other metal complex-based pigments.

Examples of the dye include an azo dye, a cyanine dye, a triphenylmethane dye, a phthalocyanine dye, an anthraquinone dye, a naphthoquinone dye, a quinonimine dye, a methine dye, an azomethine dye, a squarylium dye, an acridine dye, a styryl dye, a coumarin dye, a quinoline dye, and a nitro dye. The dye may be a disperse dye.

The pigment and the dye constituting the colorant may be blended into the resin as they are, but may be blended into the resin after being converted into the form of ink, toner, or the like.

The interlayer film may also contain additives such as an ultraviolet absorbent, an antioxidant, a light stabilizer, an adhesion modifier, a fluorescent brightening agent, and a crystal nucleating agent, as needed, in addition to the graphene-based material, a light blocking agent, and a colorant.

<Layer Configuration>

The layer configuration of the interlayer film of the present invention will be described in more detail below.

(Single-layer structure)

In the present invention, the interlayer film may include a single-layer resin layer (also referred to as a "first resin layer"). When the interlayer film includes a single-layer resin layer, the resin layer is a colored resin layer containing a graphene-based material. For the single-layer resin layer, both surfaces of the resin layer may be respectively adhered to glass plates constituting laminated glass. In the interlayer film having a single-layer structure, the entire region of the interlayer film may be a region containing a graphene-based material (colored region). A region colored with a graphene-based material is referred to herein as a "colored region" for convenience, and a region colored with only a material other than a "graphene-based material" is not referred to as a "colored region".

(Multilayer Structure)

The interlayer film may have a multilayer structure including a plurality of resin layers, as described above. The multilayer structure including the plurality of resin layers may be a two-layer structure in which two resin layers are laminated in the thickness direction, a three-layer structure in which three resin layers are laminated, or one in which four or more resin layers are laminated. Among these, the interlayer film preferably has a two- to five-layer structure, more preferably a three- to five-layer structure, and further preferably a three-layer structure. In the case of a multilayer structure, at least one resin layer is a colored resin layer including a graphene-based material.

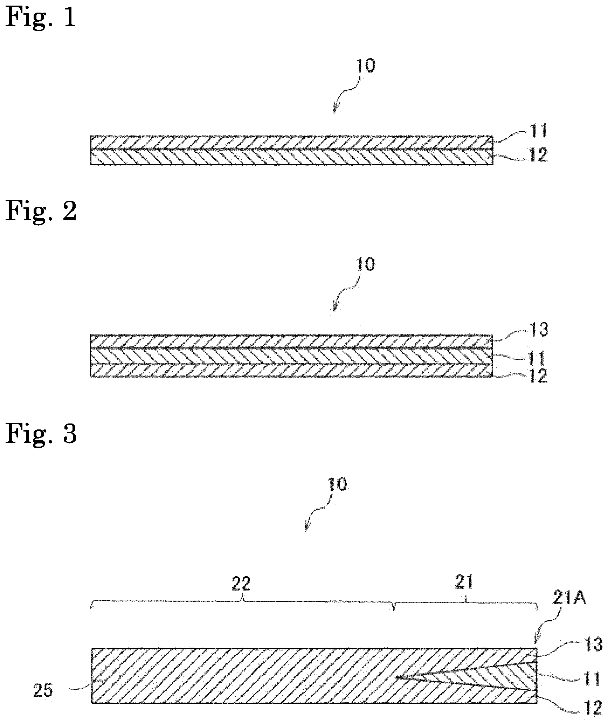

Specific examples when the interlayer film has a multilayer structure will be described below using first to seventh embodiments shown in Figs. 1 to 7.

The interlayer film 10 of the first embodiment shown in Fig. 1 is an interlayer film having a two-layer structure and has a first resin layer 11 and a second resin layer 12, and the second resin layer 12 is provided on one surface side of the first resin layer 11.

For the interlayer film 10 having a two-layer structure, it is recommended that in laminated glass, the first resin layer 11 adhere to one glass plate, and the second resin layer adhere to the other glass plate. For the first resin layer 11 and the second resin layer 11, either one may be a colored resin layer, but both may be colored resin layers. In the interlayer film 10 having a two-layer structure, it is recommended that the entire region include a two-layer structure, and the entire region be a colored region, as shown in Fig. 1.

The interlayer film 10 of the second embodiment shown in Fig. 2 is an interlayer film having a three-layer structure and has first to third resin layers 11, 12, and 13, and the second resin layer 12 is provided on one surface side of the first resin layer 11, and the third resin layer 13 is provided on the other surface side of the first resin layer 11. For the interlayer film 10 of the third embodiment, it is recommended that in laminated glass, the second resin layer 11 adhere to one glass plate, and the third resin layer 13 adhere to the other glass plate.

At least any one of the first to third resin layers 11, 12, and 13 contains a graphene-based material and is a colored resin layer. Specifically, of the first to third resin layers 11, 12, and 13, only the first resin layer 11 may be a colored resin layer, or only one of the second and third resin layers 12 and 13 or both of these may be colored resin layers. Further, the first resin layer 11 and either one of the second and third resin layers 12 and 13 may be colored resin layers. In addition, all of the first to third resin layers 11, 12, and 13 may be colored resin layers.

Among the above, preferably at least the first resin layer 11 is a colored resin layer. When the first resin layer 11 is a colored resin layer, the durability of graphene contained in the first resin layer 11 can be enhanced by including an ultraviolet absorbent in the second resin layer to effectively block ultraviolet rays.

When an interlayer film has a multilayer structure, the entire region of the interlayer film may be a colored region, as shown in Figs. 1 and 2, but a partial region may be a colored region. Specifically, like the interlayer film 10 shown in the third embodiment shown in Fig. 3, when an interlayer film has first to third resin layers 11, 12, and 13 and has a three-layer structure, the interlayer film may have such a structure that in the partial region 21 (first region 21) of the interlayer film, the first resin layer 11 is disposed between the second and third resin layers 12 and 13 and embedded between these resin layers 12 and 13. Here, the first region 21 is a region (gradation region) in which the thickness of the first resin layer 11 decreases continuously along the direction orthogonal to the thickness direction (that is, one direction of the plane directions) from the thickest portion 21A at an end of the interlayer film 10. The first resin layer 11 has a tapered shape along the direction orthogonal to the thickness direction. It is recommended that in the region beyond the tip of the tapered shape (that is, a second region 22 adjacent to the first region 21), the second and third resin layers 12 and 13 be directly laminated, and these be integral and constitute one resin layer 25.

Also here, as described above, at least one of the first to third resin layers 11, 12, and 13 may be a colored resin layer, and among them, the first resin layer 11 is preferably a colored resin layer. When the first resin layer 11 is a colored resin layer, the shade changes gradually, and the visible light transmittance also increases gradually, from the thickest portion 21A toward the second region 22, and an interlayer film excellent in designability can be provided.

When the first resin layer 11 is a colored resin layer, it is recommended that no graphene-based material be contained in each of the second and third resin layers 12 and 13, or the mass proportion of the graphene-based material in the resin layers 12 and 13 be set lower than the mass proportion in the first resin layer 11. Thus, it is possible to make the first region 21 a colored region and make the second region 22 a non-colored region or a low colored region that is a colored region but has a lower degree of coloration with graphene than the first region 21. Here, the non-colored region means a region that contains no graphene-based material and is not colored with a graphene-based material, and the low colored region is a region in which the amount of the graphene-based material per unit area is relatively small. The low colored region and the non-colored region are typically regions in which the visible light transmittance is relatively high, that is, the second region 22 may have higher visible light transmittance than the first region.

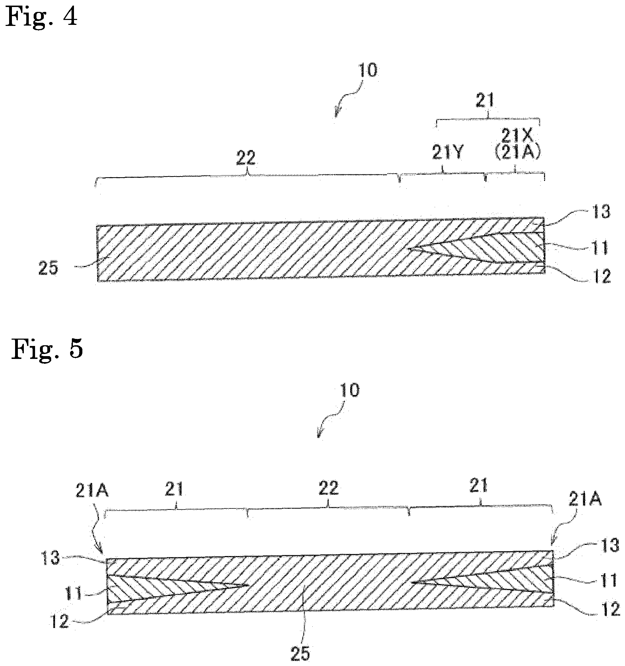

When an interlayer film has such a structure in which in the first region 21, the first resin layer 11 is disposed between the second and third resin layers 12 and 13 and embedded between these resin layers 12 and 13, as shown by the interlayer film 10 of the third embodiment, the configuration of the first region 21 is not limited to the above. For example, like the interlayer film 10 of the fourth embodiment shown in Fig. 4, the first region 21 may include a region 21X in which the thickness is fixed, and a region (gradation region) 21Y which is connected to the region 21X and in which the thickness decreases continuously along the direction orthogonal to the thickness direction.

In this case, on the tip side of the tapered shape of the region 21Y, the second and third resin layers 12 and 13 are directly laminated, and these are integral and form a resin layer 25, in the same manner as the third embodiment.

Also in the fourth embodiment (Fig. 4), at least one of the first to third resin layers 11, 12, and 13 may be a colored resin layer, and among them, the first resin layer 11 is preferably a colored resin layer. When the first resin layer 11 is a colored resin layer, for example, the area of the portion having high light blocking properties can be widened because the thickest portion 21A is the region 21X having a fixed area, and the heat shielding properties and the like of the interlayer film are easily enhanced. In the fourth embodiment, configurations whose description is omitted are as described for the third embodiment.

In the third and fourth embodiments, only one first region 21 is provided, but as shown in the fifth embodiment in Fig. 5, a plurality of first regions 21 may be provided. That is, in the above, the first region 21 is provided at only one end in the direction orthogonal to the thickness direction but may be provided at both ends, like the interlayer film of the fifth embodiment.

Also in the fifth embodiment, at least one of the first to third resin layers 11, 12, and 13 may be a colored resin layer, and among them, the first resin layer 11 is preferably a colored resin layer. When the first resin layer 11 is a colored resin layer, colored regions composed of the first regions 21 are provided at both ends of the interlayer film 10, and both ends of the interlayer film 10 are light blocking portions having light blocking properties, and the heat shielding properties and the like of the interlayer film can be enhanced.

In the interlayer film of the fifth embodiment, other configurations are the same as the interlayer film of the third embodiment, and therefore their description is omitted.

In the fifth embodiment, each first region 21 includes a gradation region but may include a region 21X in which the thickness is fixed, and a region 21Y including a gradation region, in the same manner as the fourth embodiment.

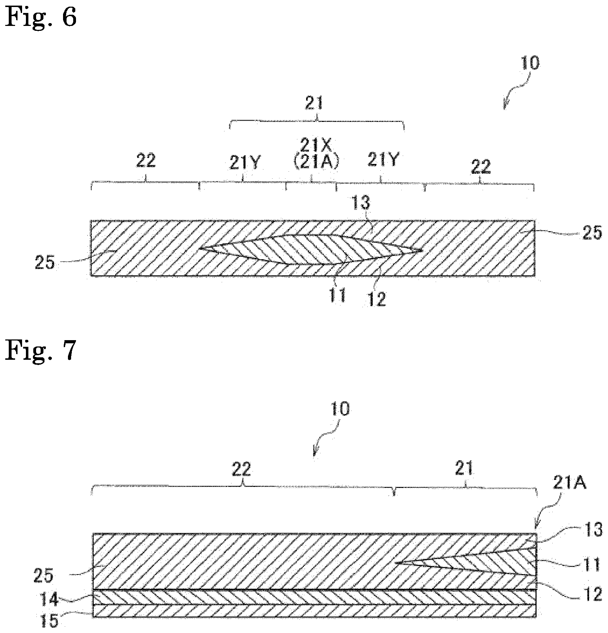

Further, the first region 21 in which the first resin layer 11 is embedded between the first and second resin layers 12 and 13 may be provided at a position other than an end and may be provided, for example, between both ends (in the central portion), as shown in the sixth embodiment shown in Fig. 6.

Here, the first region 21 includes a region 21X in which the thickness is fixed, and regions (gradation regions) 21Y and 21Y which are connected to both ends of the region 21X and in which the thickness decreases continuously along the direction orthogonal to the thickness direction. A second region 22 is provided on the tip side of the tapered shape of each region 21Y in the same manner as the third to fifth embodiments. In the second region 22, the second resin layer 12 and the third resin layer 13 are directly laminated, and these are integral and form a resin layer 25.

Also in the sixth embodiment, at least one of the first to third resin layers 11, 12, and 13 may be a colored resin layer, and among them, the first resin layer 11 is preferably a colored resin layer. When the first resin layer 11 is a colored resin layer, the central portion of the interlayer film 10 is a colored region (a light blocking portion having light blocking properties) composed of the first region 21, and the heat shielding properties and the like of the interlayer film can be enhanced.

In the interlayer film of the sixth embodiment, other configurations are the same as the interlayer film of the third embodiment, and therefore their description is omitted.

Of course, the number of resin layers may be four or more, and in the interlayer film, in addition to the first to third resin layers described using the second to sixth embodiments (Fig. 2 to Fig. 6), a fourth resin layer or fourth and fifth resin layers may be provided. In this case, the interlayer film may have, for example, a laminated structure in which third, first, second, and fourth resin layers are provided in this order. In the same manner, when fourth and fifth resin layers are provided, the interlayer film may have, for example, a laminated structure in which third, first, second, fourth, and fifth resin layers are provided in this order.

One preferred embodiment of a laminated structure in which first to fifth resin layers are provided will be described using Fig. 7 as the seventh embodiment. When an interlayer film has first to fifth resin layers, the first resin layer is preferably provided in a partial region of the entire region of the interlayer film in the same manner as the third to sixth embodiments, and the interlayer film may have such a structure that in the partial region (first region 21), the first resin layer 11 is disposed between the second and third resin layers 12 and 13 and embedded between these resin layers 12 and 13, as shown in Fig. 7. It is recommended that in the other region (the second region 22), the first resin layer 11 be not provided, the second and third resin layers 12 and 13 be directly laminated, and these be integral and constitute one resin layer 25.

The fourth resin layer 14 and the fifth resin layer 15 may be provided in this order on the surface of the second resin layer 12. In the interlayer film 10 having such a configuration, a function can be appropriately provided to the interlayer film 10 by the fourth resin layer 14 and the fifth resin layer 15.

Also in the seventh embodiment (Fig. 7), at least any one of the first to third resin layers 11, 12, and 13 may contain a graphene-based material and be a colored resin layer, as described for the third embodiment, and also in this embodiment, preferably at least the first resin layer 11 is a colored resin layer. When the first resin layer 11 is a colored resin layer, the shade changes gradually, and the visible light transmittance can also be gradually increased, from the thickest portion 21A toward the second region 22, and an interlayer film excellent in designability can be provided, and further a colored region can be partially formed in the interlayer film 10. Of course, the graphene-based material may be contained in one or both of the fourth resin layers 14 and 15.

For example, when the fourth resin layer 14 and the fifth resin layer 15 are provided, the shapes and layer configuration of the first to third resin layers 11, 12, and 13 need not be the same as the third embodiment (Fig. 3) and may be the same as the fourth to sixth embodiments (Fig. 4 to Fig. 6). Of course, the shapes and layer configuration of the first to third resin layers 11, 12, and 13 may be the same as the second embodiment (Fig. 2).

In the third to seventh embodiments, in the first region 21, resin layers adjacent to each other in the thickness direction (for example, the third and first resin layers 13 and 11 and the first and second resin layers 11 and 12, and further additionally the second and fourth resin layers 12 and 14 and the fourth and fifth resin layers 14 and 15) may have different compositions from each other. On the other hand, a description has been given assuming a mode in which the second resin layer 12 and the third resin layer 13 both have the same composition, and in the second region 22, these two resin layers 12 and 13 are integral and form one layer (first layer 25). However, the two resin layers 12 and 13 may have different compositions from each other, and form a multilayer structure of the two resin layers 12 and 13 in the second region 22 without forming one layer.

In the same manner, in the second embodiment, in the entire region, resin layers adjacent to each other in the thickness direction (for example, the third and first resin layers 13 and 11 and the first and second resin layers 11 and 12) may have different compositions from each other. On the other hand, the third resin layer 13 and the second resin layer 12 may have different compositions from each other or may have the same composition as each other.

The laminated structures described above are examples of the laminated structure of the interlayer film of the present invention, and the laminated structure of the interlayer film of the present invention is not limited to these structures.

In each of the laminated structures, the details of the resin and the plasticizer in each resin layer are as described above, and regarding the resin layers, a configuration as described above may be appropriately used.

For example, when the interlayer film is a multilayer structure having the first to third resin layers 11 to 13, like the second to sixth embodiments, and the first to third resin layers 11 to 13 contain polyvinyl acetal resins as the resins constituting the resin layers, the details of the polyvinyl acetal resins constituting the first to third resin layers 11, 12, and 13, and the details of the plasticizer are as described above.

In the same manner, for example, when the interlayer film is a multilayer structure having the first to fifth resin layers 11 to 15, like the seventh embodiment, and the first to fifth resin layers 11 to 15 contain polyvinyl acetal resins as the resins constituting the resin layers, the details of the polyvinyl acetal resins constituting the first to fifth resin layers 11 to 15, and the details of the plasticizer are as described above.

However, for example, in the second embodiment, for the polyvinyl acetal resins contained in the first to third resin layers 11, 12, and 13, respectively and the content of the plasticizer, the following configurations are preferred. By adjusting the polyvinyl acetal resins and the content of the plasticizer according to the following description, the first resin layer 11 easily exhibits a function as a sound insulating layer, and the sound insulation properties can be enhanced while the adhesiveness of the interlayer film 10 to glass plates is enhanced.

In the following description, the polyvinyl acetal resins contained in the first to third resin layers 11, 12, and 13, respectively will be described as polyvinyl acetal resins (1), (2), and (3). The content of the plasticizer based on 100 parts by mass of the resin in the resin layers (for example, the first to third resin layers 11, 12, and 13) will be described as a content (1), a content (2), and a content (3).

From the viewpoint of enhancing the sound insulation properties of the first resin layer 11 while maintaining the adhesiveness of the second and third resin layers 12 and 13 to glass plates, the content of hydroxyl groups in the polyvinyl acetal resin (1) is preferably lower than the content of hydroxyl groups in the polyvinyl acetal resin (2). In the same manner, the content of hydroxyl groups in the polyvinyl acetal resin (1) is preferably lower than the content of hydroxyl groups in the polyvinyl acetal resin (3). The absolute values of the differences between the content of hydroxyl groups in the polyvinyl acetal resin (1) and the content of hydroxyl groups in the polyvinyl acetal resins (2) and (3) are each preferably 1 mol % or more. Thus, the sound insulation properties can be further enhanced. From such a viewpoint, the difference between the contents of hydroxyl groups is more preferably 5 mol % or more. The absolute value of the difference between the contents of hydroxyl groups is preferably 20 mol % or less.

The content of hydroxyl groups (amount of hydroxyl groups) in the polyvinyl acetal resin (1) is preferably 15 mol % or more, more preferably 17 mol % or more, and, for example, 35 mol % or less, preferably 33 mol % or less. When the content of hydroxyl groups is equal to or more than the lower limits, the flexural rigidity of the interlayer film increases, and the productivity and the like are also excellent. From the viewpoint of the polyvinyl acetal resin (1) absorbing the plasticizer to increase the sound insulation properties of laminated glass, the content of hydroxyl groups is more preferably 30 mol % or less, further preferably 25 mol % or less.

The content of hydroxyl groups in the polyvinyl acetal resin (2) and the content of hydroxyl groups in the polyvinyl acetal resin (3) are each, for example, 20 mol % or more, preferably 25 mol % or more. When the content of hydroxyl groups is equal to or more than the lower limits, the flexural rigidity can be made higher, and the adhesiveness can also be enhanced, while the sound insulation properties are maintained. From the viewpoint of more enhancing the adhesiveness to glass plates, the content of hydroxyl groups is more preferably 28 mol % or more.

The content of hydroxyl groups in the polyvinyl acetal resin (2) and the content of hydroxyl groups in the polyvinyl acetal resin (3) are preferably 38 mol % or less, more preferably 35 mol % or less, and further preferably 33 mol % or less. When the content of hydroxyl groups is equal to or less than the upper limits, the polyvinyl acetal resin precipitates easily during the synthesis of the polyvinyl acetal resin.

The degree of acetalization of the polyvinyl acetal resin (1) is preferably 47 mol % or more, more preferably 55 mol % or more, and further preferably 60 mol % or more, and preferably 85 mol % or less, more preferably 80 mol % or less, and further preferably 75 mol % or less. When the degree of acetalization is equal to or more than the lower limits, the compatibility between the polyvinyl acetal resin (1) and the plasticizer increases. When the degree of acetalization is equal to or less than the upper limits, the amount of the residual aldehyde in the resin can be reduced.

The degrees of acetalization (the degrees of butyralization in the case of polyvinyl butyral resins) of the polyvinyl acetal resin (2) and the polyvinyl acetal resin (3) are preferably 47 mol % or more, more preferably 55 mol % or more, and further preferably 60 mol % or more, and preferably 85 mol % or less, more preferably 80 mol % or less, and further preferably 75 mol % or less. When the degrees of acetalization are equal to or more than the lower limits, the compatibility between the polyvinyl acetal resins and the plasticizer increases. When the degrees of acetalization are equal to or less than the upper limits, the amount of the residual aldehyde in the resins can be reduced.

The degree of acetylation (amount of acetyl groups) of the polyvinyl acetal resin (1) is preferably 0.01 mol % or more, more preferably 0.1 mol % or more. From the viewpoint of increasing the compatibility between the polyvinyl acetal resin and the plasticizer and easily blending a large amount of the plasticizer, the degree of acetylation is further preferably 7 mol % or more, particularly preferably 9 mol % or more. The degree of acetylation of the polyvinyl acetal resin (1) is preferably 30 mol % or less, more preferably 25 mol % or less, and further preferably 20 mol % or less. When the degree of acetylation is equal to or less than the upper limits, the moisture resistance of the interlayer film and laminated glass increases.

The degrees of acetylation of the polyvinyl acetal resin (2) and the polyvinyl acetal resin (3) are preferably 10 mol % or less, more preferably 2 mol % or less. When the degrees of acetylation are equal to or less than the upper limits, the moisture resistance of the interlayer film and laminated glass increases. The degrees of acetylation are not particularly limited but are preferably 0.01 mol % or more, more preferably 0.1 mol % or more.

PVA for obtaining the polyvinyl acetal resins (1), (2), and (3) will be described as PVA (1), PVA (2), and PVA (3). The average degrees of polymerization of the PVA (1), the PVA (2), and the PVA (3) are as described for the above PVA, but when the content of the plasticizer is increased, the average degree of polymerization of PVA is preferably increased. Therefore, in the first resin layer 11, for example, when the content (1) of the plasticizer is 55 parts by mass or more, it is also preferred that the average degree of polymerization of the PVA (1) be 2000 or more, or the like.

From the same viewpoint, the average degree of polymerization of the PVA (1) is preferably equal to or more than the average degrees of polymerization of the PVA (2) and the PVA (3). When the average degree of polymerization of the PVA (1) is increased in this manner, various properties are easily maintained, for example, even when the content of the plasticizer is increased, in the first resin layer.

The content (1) of the plasticizer is, for example, 20 parts by mass or more, preferably 30 parts by mass or more, and more preferably 35 parts by mass or more. When the content (1) is equal to or more than the lower limits, the flexibility of the interlayer film increases, and the handling of the interlayer film is easy. The content (1) is preferably higher from the viewpoint of sound insulation properties, and from such a viewpoint, the content (1) is further preferably 55 parts by mass or more, still further preferably 60 parts by mass or more.

The content (1) is preferably 100 parts by mass or less, more preferably 90 parts by mass or less, further preferably 85 parts by mass or less, and particularly preferably 80 parts by mass or less. When the content (1) is equal to or less than the upper limits, the penetration resistance of laminated glass is still higher.

The content (2) of the plasticizer and the content (3) of the plasticizer are each preferably 10 parts by mass or more. When the content (2) and the content (3) are equal to or more than the lower limit, the flexibility of the interlayer film increases, and the handling of the interlayer film is easy. From these viewpoints, the content (2) and the content (3) are each more preferably 15 parts by mass or more, further preferably 20 parts by mass or more, and particularly preferably 24 parts by mass or more.

The content (2) and the content (3) are each preferably 70 parts by mass or less, more preferably 63 parts by mass or less, further preferably 54 parts by mass or less, and still further preferably 50 parts by mass or less. When the content (2) and the content (3) are each equal to or less than the upper limits, the mechanical properties, such as flexural rigidity, of the interlayer film are good.

In order to enhance the sound insulation properties of laminated glass, the content (1) of the plasticizer is preferably higher than the content (2) and preferably higher than the content (3) and further preferably higher than both the content (2) and the content (3).

From the viewpoint of still further enhancing the sound insulation properties of laminated glass, the absolute value of the difference between the content (1) and the content (2), and the absolute value of the difference between the content (1) and the content (3) are each preferably 10 parts by mass or more, more preferably 15 parts by mass or more, and further preferably 25 parts by mass or more. The absolute value of the difference between the content (1) and the content (2), and the absolute value of the difference between the content (1) and the content (3) are each preferably 80 parts by mass or less, more preferably 70 parts by mass or less, and further preferably 60 parts by mass or less.

For the polyvinyl acetal resins contained in the first to fifth resin layers 11 to 15 respectively and the content of the plasticizer, the following configurations are preferred. By adjusting the polyvinyl acetal resins and the content of the plasticizer according to the following description, the fourth resin layer 14 easily exhibits a function as a sound insulating layer, and the sound insulation properties can be enhanced while the adhesiveness of the interlayer film 10 to glass plates is enhanced.

That is, the polyvinyl acetal resin contained in the fourth resin layer 14 is a polyvinyl acetal resin (A), and the polyvinyl acetal resin contained in the fifth resin layer 15 is a polyvinyl acetal resin (B). Further, the polyvinyl acetal resins contained in the second and third resin layers 12 and 13 respectively are each a polyvinyl acetal resin (C). In such a case, it is recommended that the polyvinyl acetal resin (A) be the polyvinyl acetal resin (1) described above, the polyvinyl acetal resin (B) be the polyvinyl acetal resin (2) described above, and the polyvinyl acetal resin (C) be the polyvinyl acetal resin (3) described above.

When the content of the plasticizer based on 100 parts by mass of the thermoplastic resin in the fourth resin layer 14 is a content (A), the content of the plasticizer based on 100 parts by mass of the thermoplastic resin in the fifth resin layer 15 is a content (B), and further the content of the plasticizer based on 100 parts by mass of the thermoplastic resin in each of the second and third resin layers 12 and 13 is a content (C), it is recommended that the content (A), the content (B), and the content (C) be respectively the content (1), the content (2), and the content (3) described above.

By adjusting the resins and the content of the plasticizer in the second and third resin layers 12 and 13, the fourth resin layer 14, and the fifth resin layer 15 as described above in a five-layer structure like the seventh embodiment, the fourth resin layer 14 easily has a function as a sound insulating layer, and the sound insulation properties can also be enhanced while the adhesiveness of the interlayer film 10 to glass plates is enhanced. In addition, as described above, when the first resin layer 11 is a colored resin layer, an interlayer film excellent in designability can be provided, and further a colored region can also be partially formed in the interlayer film 10.

The polyvinyl acetal resin and the content of the plasticizer in the first resin layer 11 are not particularly limited and need not be the polyvinyl acetal resin (1), (2), or (3) and the content (1), the content (2), or the content (3) but may be appropriately designed according to the preferred ranges of the polyvinyl acetal resins and the content of the plasticizer described above.

[Thicknesses of Layers]

The thickness of the interlayer film is preferably 0.2 mm or more and 2.0 mm or less. For the interlayer film, by adjusting the content of the graphene-based material as described above and then setting the thickness within these ranges, the heat shielding properties, the visible light transmittance, the saturation, and the like are easily adjusted within the desired ranges. The thickness of the interlayer film is more preferably 0.25 mm or more and 1.0 mm or less, further preferably 0.3 mm or more and 0.9 mm or less.

In a multilayer structure, the thickness of the colored resin layer is not particularly limited but is, for example, 0.01 or more and 1 or less, preferably 0.03 or more and 0.75 or less, and more preferably 0.05 or more and 0.45 or less to the total thickness of the interlayer film in thickness rate (colored resin layer/total thickness).

The specific thickness of the colored resin layer in the multilayer structure is not particularly limited but is, for example, 0.02 mm or more and 1 mm or less, preferably 0.03 mm or more and 0.8 mm or less, and further preferably 0.04 mm or more and 0.5 mm or less. By setting the thickness of the colored resin layer at 0.02 mm or more and 1 mm or less, the heat shielding properties and designability of the interlayer film are easily provided without making the interlayer film larger than necessary.

When there are two or more colored resin layers, the thickness of the colored resin layer means their total thickness. The thickness of the colored resin layer is the thickness of the colored resin layer in the portion where the colored resin layer is the thickest (thickest portion).

As described above, when the multilayer structure contains first to third resin layers, the first resin layer is preferably a colored resin layer. In such a case, the thickness of the first resin layer (colored resin layer) is not particularly limited but is 0.02 mm or more and 1 mm or less, preferably 0.03 mm or more and 0.8 mm or less, and further preferably 0.04 mm or more and 0.5 mm or less. The thickness of each of the second and third resin layers is not particularly limited but is, for example, 0.1 mm or more and 0.7 mm or less, more preferably 0.15 mm or more and 0.6 mm or less, and further preferably 0.2 mm or more and 0.5 mm or less.

When fourth and fifth resin layers are provided, the thickness of each of the fourth and fifth resin layers is not particularly limited but is, for example, 0.1 mm or more and 0.7 mm or less, more preferably 0.15 mm or more and 0.6 mm or less, and further preferably 0.2 mm or more and 0.5 mm or less.

As described above, the thickness of the first resin layer may fluctuate, and the thicknesses of the layers may also fluctuate. The thicknesses of the first to fifth resin layers are the thicknesses of the resin layers in the portion where the thickness of the first resin layer is largest (thickest portion).

[Optical Properties of Interlayer Film]

In one aspect, the interlayer film of the present invention preferably has a visible light transmittance (Tv) of 70% or more. The visible light transmittance (Tv) of the interlayer film here and the total solar transmittance (Tts) described later are values measured for laminated glass made by adhering two standard glass plates (1) to each other via the interlayer film disposed between these. The standard glass plates (1) are clear glass plates each having a thickness of 2.5 mm and having a visible light transmittance of 90.5%, a solar transmittance of 87.3%, and a solar reflectance of 8.3% as measured in accordance with JIS R 3106: 1998. However, of the visible light transmittance (Tv), only the visible light transmittance (Tv) of the interlayer film in formulas (2), (2-1), and (2-2) described later is a value measured for laminated glass made by adhering two standard glass plates (2) described later to each other via the interlayer film disposed between these.

The saturation (C) of the interlayer film described later is a value measured for laminated glass made by adhering two standard glass plates (2) to each other via the interlayer film disposed between these.

The standard glass plates (2) are clear glass plates each having a thickness of 2.5 mm and having a visible light transmittance of 90.5% as measured in accordance with JIS R 3106: 1998 and a saturation of 0.6 as measured in accordance with JIS Z 8781.

The interlayer film may have a colored region containing a graphene-based material, and a non-colored region containing no graphene-based material, and in that case, the visible light transmittance (Tv), and the total solar transmittance (Tts) and the saturation (C) described later mean the visible light transmittance (Tv), the total solar transmittance (Tts), and the saturation (C) in the colored region unless otherwise mentioned. It is possible that the colored region has a gradation region, the content of the graphene-based material at the total thickness of the interlayer film changes, and the visible light transmittance and the like also change. In that case, the visible light transmittance, the total solar transmittance (Tts), and the saturation (C) at the position where the visible light transmittance is lowest should be measured.

When the visible light transmittance (Tv) of the interlayer film is 70% or more, the transparency of the obtained laminated glass increases, and the laminated glass is preferably used for applications where an object to be observed is visually recognized via laminated glass, and can be preferably used, for example, for windshield glass (front glass). From the viewpoint of enhancing the transparency and the visibility, the visible light transmittance (Tv) of the interlayer film is more preferably 75% or more, further preferably 80% or more. The visible light transmittance is not particularly limited but is, for example, 90% or less, from the viewpoint of ensuring certain heat shielding properties.

In another aspect, the interlayer film of the present invention may have a visible light transmittance (Tv) of less than 70%. When the visible light transmittance (Tv) is less than 70%, the colored region can be used as a light blocking portion in laminated glass. From the viewpoint of preferably using the colored region as a light blocking portion, the visible light transmittance (Tv) of the interlayer film is preferably 30% or less, more preferably 10% or less, further preferably 5% or less, and still further preferably 2% or less. When the transmittance is decreased, carbon black widely used as a black colorant is recognized as strongly reddish black, but by using a graphene-based material, black close to an achromatic color can be maintained. When the visible light transmittance is decreased as described above, it can be decreased more than the infrared transmittance, and the heat shielding performance can be enhanced.

In another aspect, as the visible light transmittance of the interlayer film becomes lower, it becomes better, and its lower limit is 0%.

When the interlayer film of the present invention has a non-colored region, the visible light transmittance (Tv) of the non-colored region is preferably higher than the visible light transmittance (Tv) in the colored region and is preferably 75% or more, more preferably 80% or more, and further preferably 85% or more, and is not particularly limited but is, for example, 95% or less.

The total solar transmittance (Tts) and visible light transmittance (Tv) of the interlayer film preferably satisfy the requirement of the following formula (1):

$$(Tts - 31)/Tv < 0.6 \quad (1)$$

Satisfying the requirement shown in the formula (1) means that compared with a case where the same level of visible light transmittance is obtained using carbon black widely used as a colorant, the interlayer film of the present invention has significantly low total solar transmittance (Tts) and that the interlayer film of the present invention has excellent heat shielding properties.

From the above viewpoints, the total solar transmittance (Tts) and visible light transmittance (Tv) of the interlayer film of the present invention more preferably satisfy the requirement of the following formula (1-1):

$$(Tts - 29.5)/Tv < 0.6 \, (1-1)$$

The total solar transmittance (Tts) and visible light transmittance (Tv) of the interlayer film of the present invention more preferably satisfy the requirement of the following formula (1-2) and most preferably satisfy the requirement of the following formula (1-3).

$$(Tts - 27.5)/Tv < 0.6 \, (1-2)$$

$$(Tts - 26.0)/Tv < 0.6 \, (1-3)$$

Further, the saturation (C) and visible light transmittance (Tv) of the interlayer film preferably satisfy the requirement of the following formula (2):

$$(C - 16)/Tv < -0.15 \quad (2)$$

Satisfying the requirement shown in the formula (2) means that compared with a case where the same level of visible light transmittance is obtained using carbon black widely used as a colorant, the interlayer film of the present invention has significantly low saturation (C) and that the interlayer film of the present invention has excellent designability.

From the above viewpoints, the total solar transmittance (Tts) and visible light transmittance (Tv) of the interlayer film of the present invention more preferably satisfy the requirement of the following formula (2-1):

$$(C - 9)/Tv < -0.06 \quad (2\text{-}1)$$

The total solar transmittance (Tts) and visible light transmittance (Tv) of the interlayer film of the present invention further preferably satisfy the following formula (2-2):

$$(C - 4)/Tv < -0.001 \quad (2\text{-}2)$$

The saturation (C) of the interlayer film is not particularly limited but is preferably 15 or less, more preferably 10 or less, further preferably 8 or less, still further preferably 6 or less, and most preferably 3 or less. When the saturation (C) is decreased, the interlayer film is easily made achromatic black. As the saturation (C) of the interlayer film becomes lower, the interlayer film becomes achromatic. The saturation (C) of the interlayer film may be 0 or more.

(Method for Producing Interlayer Film)

When the interlayer film of the present invention is a single-layer structure, for example, it is recommended that the components constituting the interlayer film, such as a resin, a graphene-based material, and additives blended as needed, be mixed, and the obtained resin composition be formed by extrusion, compression molding, or the like, which is not particularly limited.

For the graphene-based material, from the viewpoint of enhancing the dispersing ability in the resin composition, for example, when a plasticizer is used, the graphene-based material may be blended into the plasticizer, sufficiently dispersed in the plasticizer, and then mixed with a resin. At this time, a dispersant or the like may be appropriately added to the plasticizer. As the dispersant, a surfactant or a polymer compound is used. As the polymer compound, an amphiphilic polymer compound such as polyvinyl alcohol or a polyvinyl butyral resin is preferred. Particularly polyvinyl butyral is preferred. The polymer compound, such as polyvinyl butyral, used as the dispersant may be used as it is as part of the resin constituting the interlayer film. The dispersant may be a cationic compound such as an aliphatic amine and its salt.

Also when the interlayer film is a multilayer structure, it may be formed by extrusion, compression molding, or the like in the same manner as when it is a single-layer structure. For example, a method is preferred in which two or more extruders are provided, a multilayer feed block is attached to the tips of the plurality of extruders, and coextrusion is performed.

For example, a method is preferred in which a plurality of extruders are provided, and components constituting resin layers are supplied to the extruders and coextruded with a multilayer feed block attached to the tips of these extruders. When a plurality of resin layers are provided, and there are two or more resin layers having the same composition (for example, second and third resin layers), the two or more resin layers having the same composition may be extruded from one extruder. Further, for the resin layers, the thickness may change along the direction orthogonal to the thickness direction, and in that case, the thickness may be changed, for example, by adjusting the amount of the resin supplied, or the like.

<Laminated Glass>

The present invention further provides laminated glass. The laminated glass includes two glass plates and an interlayer film disposed between these glass plates, and the two glass plates are adhered to each other via the interlayer film. For the interlayer film, one surface adheres to one glass plate, and the other surface adheres to the other glass plate.

The laminated glass may be produced by disposing the above-described interlayer film between two glass plates and integrating these by pressure bonding or the like.

(Glass Plates)

The glass plates used in the laminated glass may be either of inorganic glass and organic glass, but inorganic glass is preferred. The inorganic glass is not particularly limited, and examples thereof include clear glass, float plate glass, polished plate glass, figured glass, mesh wire glass, line wire glass, and green glass.

As the organic glass, organic glass referred to as resin glass is generally used. The organic glass is not particularly limited, and examples thereof include organic glass composed of a resin such as a polycarbonate, an acrylic resin, an acrylic copolymer resin, or a polyester.

The two glass plates may be composed of the same type of material as each other or may be composed of different materials. For example, it is possible that one is inorganic glass and the other is organic glass, but it is preferred that both the two glass plates be inorganic glass or organic glass.

The thicknesses of the glass plates are not particularly limited but are, for example, about 0.1 to 15 mm, preferably 0.5 to 5 mm. The thicknesses of the glass plates may be the same as each other or may be different but are preferably the same.

[Optical Properties of Laminated Glass]

The laminated glass of the present invention may have the same optical properties as the optical properties described for the interlayer film. Specifically, like the interlayer film, in one aspect, the laminated glass of the present invention preferably has a visible light transmittance of 70% or more, preferably 75% or more, and more preferably 80% or more. The visible light transmittance is not particularly limited but is, for example, 90% or less.

Like the interlayer film, in another aspect, the laminated glass of the present invention may have a visible light transmittance of less than 70%. In another aspect, the visible light transmittance of the laminated glass is preferably 30% or less, more preferably 10% or less, further preferably 5% or less, and still further preferably 2% or less. In another aspect, as the visible light transmittance of the laminated glass becomes lower, it becomes better, and its lower limit is 0%.

The visible light transmittance (Tv) of the laminated glass, and the total solar transmittance (Tts) of the laminated glass and the saturation (C) of the laminated glass described later mean the visible light transmittance (Tv), the total solar transmittance (Tts), and the saturation (C) in the colored region unless otherwise mentioned. In the colored region, the visible light transmittance, the total solar transmittance (Tts), and the saturation (C) at the position where the visible light transmittance is lowest should be measured.

In the laminated glass of the present invention, when the interlayer film has a non-colored region, the visible light transmittance (Tv) in the non-colored region is preferably higher than the visible light transmittance (Tv) in the colored region and is preferably 75% or more, more preferably 80% or more, and further preferably 85% or more, and is not particularly limited but is, for example, 95% or less.

Like the interlayer film, the total solar transmittance (Tts) and visible light transmittance (Tv) of the laminated glass preferably satisfy the requirement of the following formula (1), more preferably satisfy the requirement of the following formula (1-1), further preferably satisfy the requirement of the following formula (1-2), and still further preferably satisfy the requirement of the following (1-3).

$$(Tts - 31)/Tv < 0.6 \quad (1)$$

$$(Tts - 29.5)/Tv < 0.6 \, (1\text{-}1)$$

$$(Tts - 27.5)/Tv < 0.6 \, (1\text{-}2)$$

$$(Tts - 26.0)/Tv < 0.6 \, (1\text{-}3)$$

Further, Like the interlayer film, the saturation (C) and visible light transmittance (Tv) of the laminated glass preferably satisfy the requirement of the following formula (2), more preferably satisfy the requirement of the following formula (2-1), and further preferably satisfy the requirement of the following formula (2-2).

$$(C - 16)/Tv < -0.15 \quad (2)$$

$$(C - 9)/Tv < -0.06 \quad (2\text{-}1)$$

$$(C - 4)/Tv < -0.001 \quad (2\text{-}1)$$

The visible light transmittance (Tv), total solar transmittance (Tts), and the saturation (C) of the laminated glass can be measured for the obtained laminated glass according to methods described in Examples described later.

From the same viewpoint as the saturation (C) of the interlayer film, the saturation (C) of the laminated glass is not particularly limited but is preferably 15 or less, more preferably 10 or less, further preferably 8 or less, and still further preferably 6 or less. The saturation (C) of the laminated glass may be 0 or more.

The laminated glass of the present invention can be used as window glass for various vehicles such as automobiles, aircraft, ships, buildings, and the like but is preferably used as automobile laminated glass. The automobile laminated glass may be any of windshield glass (front glass), side glass, rear glass, and roof glass.

When the laminated glass is used for automobile laminated glass, the entire surface of the laminated glass may be a colored region, but part of the laminated glass may be a colored region.

For example, it is recommended that in any of front glass, side glass, rear glass, and roof glass, according to the configuration of the third or fourth embodiment (Fig. 3 or 4) or the like, a colored region be provided in the upper portion to form a sunshade, and a non-colored region be provided in the lower portion. It is recommended that according to the configuration of the fifth embodiment (Fig. 5) or the like, in any of side glass, rear glass, and roof glass, colored regions be provided in the upper portion and the lower portion to form sunshades, and a non-colored region be provided in the central portion.

Further, for example, in roof glass or side glass, according to a single-layer structure, the configurations of the first and second embodiments (Figs. 1 and 2), or the like, the entire surface of the roof glass or the side glass may be a colored region.

For laminated glass for an automobile roof, at least part of the laminated glass may be disposed on a roof, and, for example, glass disposed over a roof and a rear is also laminated glass for an automobile roof.

Examples

The present invention will be described in more detail by Examples, but the present invention is not limited in any way by these examples.

The measurement methods and the evaluation methods in the present Examples are as follows.

(Thicknesses of Layers)

An interlayer film was cut perpendicularly to the thickness direction by a single-edged razor blade ("FAS-10" manufactured by FEATHER SAFETY RAZOR CO., Ltd) to expose the cross section. The cross section was observed by a microscope ("DSX-100" manufactured by Olympus Corporation), and the thickness was measured.

For the thicknesses of the layers, when the first resin layer has a gradation region, and the thickness changes along the direction orthogonal to the thickness direction, the thicknesses of the layers where the first resin layer is the thickest are measured.

(Measurement of Visible Light Transmittance (Tv))

Visible light transmittance (Tv) was measured in accordance with JIS R3212 (2015) using a spectrophotometer ("U-4100" manufactured by Hitachi High-Technologies Corporation). In the measurement, laminated glass was placed at a position 13 cm away from an integration sphere so that only parallel light transmitted through the laminated glass was received by the integrating sphere and so that the laminated glass was on the optical path between a light source and the integrating sphere and parallel to the normal line to the optical axis, and the spectral transmittance was measured. The visible light transmittance was calculated from the spectral transmittance obtained. The measurement was performed under the measurement conditions of a scan speed of 300 nm/min and a slit width of 8 nm and in accordance with JIS R 3212 (2015) for other conditions.

[L*, a*, b*, and Saturation (C)]

A spectrum was measured using a spectrophotometer ("U-4100" manufactured by Hitachi High-Technologies Corporation). In the measurement, laminated glass was placed at a position 13 cm away from an integration sphere so that only parallel light transmitted through the laminated glass was received by the integrating sphere and so that the laminated glass was on the optical path between a light source and the integrating sphere and parallel to the normal line to the optical axis, and the spectral transmittance was measured. The visible light transmittance was calculated from the spectral transmittance obtained. The L*, a*, and b* were measured under the measurement conditions of a scan speed of 300 nm/min and a slit width of 8 nm using for other measurement conditions the CIE standard illuminant D65 and the color matching functions for a field of view of 10° prescribed in JIS Z 8781-1 (2012), JIS Z 8781-2 (2012), and JIS Z 8781-4 (2013). The saturation (C) was obtained with the measured a* and b* from the following formula:

$$C = ((a^*)^2 + (b^*)^2)^{0.5}$$

[Total Solar Transmittance (Tts)]

Total Solar Transmittance (Tts) was measured in accordance with ISO 13837 using a spectrophotometer ("U-4100" manufactured by Hitachi High-Technologies Corporation). The measurement conditions were a scan speed of 300 nm/min and a slit width of 8 nm.
The measurement of the visible light transmittance (Tv), L*, a*, b*, and total solar transmittance (Tts) was performed in a colored region, and in each of a colored region and a non-colored region when the interlayer film had the colored region and the non-colored region. When the colored region had a gradation region, the visible light transmittance (Tv), L*, a*, b*, and total solar transmittance (Tts) at the position where the visible light transmittance was lowest were measured.

[Particle Diameter and Thickness of Graphene-Based Material]

An ultrathin piece was cut from a film by a microtome method, and the ultrathin piece was observed under the condition of an acceleration voltage of 200 kV using a transmission electron microscope (JEM-2100, manufactured by JEOL Ltd.). The major axis and minor axis of the graphene-based material were measured from the observed photograph. The thickness of the graphene-based material was carried out by measuring the laminated structure of the carbon hexagonal net planes in the graphene-based material from the transmission electron microscope photograph. Each was measured at 30 points, and the arithmetic mean was calculated. The arithmetic mean value of the major axis was taken as the average particle diameter.

(Cloudiness)

Obtained laminated glass was visually observed to evaluate how cloudy the laminated glass was by the following evaluation criteria:

A: When the glass 30 cm away from a 270 lm LED light source is illuminated by the light source in a darkroom, five or more out of ten observers determine that clouding due to the light source does not occur in the laminated glass.
B: When the glass is illuminated by an LED light source in a darkroom, five or less out of ten observers determine that clouding due to the light source does not occur in the laminated glass.
C: When the glass is illuminated by an LED light source under a fluorescent lamp, five or more out often observers determine that there is clouding in the glass.
D: Five or more out of ten observers determine that the laminated glass is cloudy, when they see a fluorescent lamp through the laminated glass.

The components used in the Examples and Comparative Examples are as follows.

(1) Resin

Resin 1: polyvinyl butyral resin, degree of acetalization 69 mol %, amount of hydroxyl groups 30 mol %, degree of acetylation 1 mol %, degree of polymerization 1700

(2) Plasticizer

3GO: triethylene glycol di-2-ethylhexanoate

(3) Graphene-Based Materials

Graphene-based material A: It can be produced by the same method as the method for producing a flaked graphite-resin composite material described in WO 2014/034156. Specifically, partially exfoliated flaked graphite can be obtained by providing a composition in which graphite and a resin are mixed, and thermally decomposing the resin included in the composition.

Graphene-based material B: N002-PDE manufactured by Angstron Materials

Graphene-based material C: N002-PD manufactured by Angstron Materials

Graphene-based material D: Gi-PW-F031 manufactured by Angston Materials

Graphene-based material E: The graphene-based material D was ground for 90 min using Extreme Mill (MX-1200X TM, manufactured by WARING) to obtain a graphene-based material E.

Graphene-based material F: The graphene-based material D was dispersed in ethanol and irradiated with ultrasonic waves under the condition of a frequency of 20 kHz for 120 min using a tabletop digital ultrasonic homogenizer (SFX250, manufactured by BRANSON) to obtain a graphene-based material F.

(4) Carbon Black

Carbon black pigment, Pigment Black 7

(5) Other Colorants

Red pigment: perylene compound, Pigment Red 149 (CAS No 4948-15-6)

Yellow dye: anthraquinone compound, Solvent Yellow 163 (CAS No 13676-91-0)

[Example 1]

(Making of Interlayer Film)

First, a graphene-based material was added to 40 parts by mass of the plasticizer so that the content in an interlayer film was as described in Table 1, and irradiated with 40 Hz ultrasonic waves for 30 min using an ultrasonic dispersion machine ("PR-1" manufactured by THINKY) for sufficient mixing to mix the graphene-based material into the plasticizer to obtain a mixed liquid. Next, the total amount of the obtained mixed liquid was added to 100 parts by mass of the polyvinyl butyral resin (PVB), and they were melt-kneaded by a pressure kneader at 150°C for 10 min to obtain a resin composition. The obtained resin composition was extruded using an extruder to obtain a 760 $\mu$m thick interlayer film. The interlayer film was an interlayer film including a single-layer resin layer. An interlayer film including a single-layer resin layer is shown in Table 1 as "Configuration 1".

(Making of Laminated Glass)

Two clear glasses were provided. Each was 30 mm long by 30 mm wide by 2.5 mm thick and had a visible light transmittance of 90.5%, a solar transmittance of 87.3%, and a solar reflectance of 8.3% as measured in accordance with JIS R 3106: 1998, and a saturation of 0.6 as measured in accordance with JIS Z 8781. The interlayer film obtained above was maintained under the constant temperature and humidity conditions of 23°C and 28% RH for 4 h and then sandwiched between the two clear glasses to form a laminated body. The obtained laminated body was placed in a rubber bag, and the pressure was reduced by a vacuum pump. Then, the laminated body was heated so that the temperature of the glass reaches 90°C in an oven and temporarily pressure-bonded. The temporarily pressure-bonded laminated body was pressure-bonded under the conditions of 135°C and a pressure of 1.2 MPa for 20 min using an autoclave to make laminated glass. For the obtained laminated glass, the optical properties were measured and are shown in Table 1 as the properties of the interlayer film and the laminated glass.

[Examples 2 to 14]

Operations were carried out in the same manner as Example 1 except that the type of the graphene-based material and the amount of the graphene-based material added were changed as described in Table 1.

[Examples 15 and 171

First, a graphene-based material was added to 40 parts by mass of the plasticizer so that the amount added in resin layers was as described in Table 1. The graphene-based material and the plasticizer were sufficiently mixed to mix the graphene-based material into the plasticizer to obtain a mixed liquid. Next, the total amount of the obtained mixed liquid was added to 100 parts by mass of the polyvinyl butyral resin (PVB), and they were melt-kneaded by a pressure kneader at 150°C for 10 min to obtain a resin composition. The resin composition was melt-kneaded by a first extruder at a temperature of 200°C to obtain a first resin composition.
40 Parts by mass of the plasticizer and 100 parts by mass of the polyvinyl butyral resin (PVB) were charged into a second extruder to obtain a second resin composition. A multilayer feed block was attached to the tips of the first extruder and the second extruder, and a second resin layer including the second resin composition, a first resin layer including the first resin composition, and a third resin layer including the second resin composition were extruded and laminated so as to obtain thicknesses shown in Table 1. Thus, an interlayer film was obtained. The first to third resin layers each had the same thickness in the entire region of the interlayer film, and the obtained interlayer film had the configuration in Fig. 2. An interlayer film having the configuration in Fig. 2 is described in Table 1 as "Configuration 2".

[Example 16]

First and second resin compositions were prepared in the same manner as Example 16 except that the amount of the graphene-based material added was adjusted as described in Table 1.
A multilayer feed block was attached to the tips of a first extruder and a second extruder, and the resin compositions were coextruded while the amounts of the extruded resin compositions were adjusted. Thus, an interlayer film was obtained which had a first resin layer 11 embedded between second and third resin layers 12 and 13 in a first region 21 and included a resin layer 25 in which the second and third resin layers 12 and 13 were integrated in a second region 22, as shown in Fig. 3. An interlayer film having the configuration in Fig. 3 in this manner is described in Table 1 as "Configuration 3".

[Examples 18 and 19]

Operations were carried out in the same manner as Example 1 except that in addition to a graphene-based material, a colorant other than a graphene-based material was further added during the making of a mixed liquid, and the type of the graphene-based material and the amount of the graphene-based material added, and the type of the organic pigment and the amount of the organic pigment added were adjusted as described in Table 1.

[Comparative Examples 1 to 5]

Operations were carried out in the same manner as Example 1 except that the carbon black (Pigment Black7) was used instead of a graphene-based material, and the amount of the carbon black added was adjusted so that the content in the interlayer film was as described in Table 1.

[Comparative Example 6]

Operations were carried out in the same manner as Example 16 except that the carbon black was used instead of a graphene-based material, the amount of the carbon black added was adjusted so that the content in the interlayer film was as described in Table 1, and the thicknesses of the resin layers were adjusted as described in Table 1.

[Table 1]

| | | Examples | | | | | | | | | | | | | | | | | | | Comparative Examples | | | | | |
| Item | Unit | 1 | 2 | 3 | 4 | 5 | 6 | 7 | 8 | 9 | 10 | 11 | 12 | 13 | 14 | 15 | 16 | 17 | 18 | 19 | 1 | 2 | 3 | 4 | 5 | 6 |
|---|---|---|---|---|---|---|---|---|---|---|---|---|---|---|---|---|---|---|---|---|---|---|---|---|---|---|---|
| Configuration | - | Configuration | Configuration | Configuration | Configuration | Configuration | Configuration | Configuration | Configuration | Configuration | Configuration | Configuration | Configuration | Configuration | Configuration | Configuration | Configuration | Configuration | Configuration | Configuration | Configuration | Configuration | Configuration | Configuration | Configuration | Configuration |
| Glass — Type | - | CG | CG | CG | CG | CG | CG | CG | CG | CG | CG | CG | CG | CG | CG | CG | CG | CG | CG | CG | CG | CG | CG | CG | CG | CG |
| First resin layer — Blending — Resin — Type | - | Resin 1 | Resin 1 | Resin 1 | Resin 1 | Resin 1 | Resin 1 | Resin 1 | Resin 1 | Resin 1 | Resin 1 | Resin 1 | Resin 1 | Resin 1 | Resin 1 | Resin 1 | Resin 1 | Resin 1 | Resin 1 | Resin 1 | Resin 1 | Resin 1 | Resin 1 | Resin 1 | Resin 1 | Resin 1 |
| First resin layer — Blending — Resin — Amount added | Parts by mass | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 |
| First resin layer — Blending — Plasticizer — Type | - | 3GO | 3GO | 3GO | 3GO | 3GO | 3GO | 3GO | 3GO | 3GO | 3GO | 3GO | 3GO | 3GO | 3GO | 3GO | 3GO | 3GO | 3GO | 3GO | 3GO | 3GO | 3GO | 3GO | 3GO | 3GO |
| First resin layer — Blending — Plasticizer — Amount added | Parts by mass | 40 | 40 | 40 | 40 | 40 | 40 | 40 | 40 | 40 | 40 | 40 | 40 | 40 | 40 | 40 | 40 | 40 | 40 | 40 | 40 | 40 | 40 | 40 | 40 | 40 |
| First resin layer — Blending — Graphene-based material — Type | - | A | A | B | B | B | C | C | D | D | D | E | F | F | F | D | D | D | C | C | - | - | - | - | - | - |
| First resin layer — Blending — Graphene-based material — Particle diameter | μm | 4 | 4 | 0.7 | 0.7 | 0.7 | 2.5 | 2.5 | 0.2 | 0.2 | 0.2 | 0.05 | 0.1 | 0.1 | 0.1 | 0.2 | 0.2 | 0.2 | 2.5 | 2.5 | - | - | - | - | - | - |
| First resin layer — Blending — Graphene-based material — Thickness | μm | 4 | 4 | 0.003 | 0.003 | 0.003 | 0.010 | 0.010 | 0.010 | 0.010 | 0.010 | 0.010 | 0.003 | 0.003 | 0.003 | 0.010 | 0.010 | 0.010 | 0.010 | 0.010 | - | - | - | - | - | - |
| First resin layer — Blending — Graphene-based material — Degree of oxidation | % by mass | 1 | 1 | 20 | 20 | 20 | 40 | 40 | 0.3 | 0.3 | 0.3 | 0.3 | 0.3 | 0.3 | 0.3 | 0.3 | 0.3 | 0.3 | 40 | 40 | - | - | - | - | - | - |
| First resin layer — Blending — Graphene-based material — Amount added | % by mass | 0.1 | 0.025 | 0.12 | 0.05 | 0.005 | 0.04 | 0.20 | 0.1 | 0.06 | 0.007 | 0.07 | 0.04 | 0.08 | 0.005 | 0.228 | 0.456 | 0.912 | 0.20 | 0.20 | - | - | - | - | - | - |
| First resin layer — Blending — Carbon black — Type | - | - | - | - | - | - | - | - | - | - | - | - | - | - | - | - | - | - | - | - | CB | CB | CB | CB | CB | CB |
| First resin layer — Blending — Carbon black — Amount added | % by mass | - | - | - | - | - | - | - | - | - | - | - | - | - | - | - | - | - | - | - | 0.005 | 0.02 | 0.03 | 0.05 | 0.08 | 0.152 |
| First resin layer — Blending — Another colorant — Type | - | - | - | - | - | - | - | - | - | - | - | - | - | - | - | - | - | - | Red pigment | Yellow dye | - | - | - | - | - | - |
| First resin layer — Blending — Another colorant — Amount added | % by mass | - | - | - | - | - | - | - | - | - | - | - | - | - | - | - | - | - | 0.0085 | 0.013 | - | - | - | - | - | - |
| First resin layer — Thickness | μm | 750 | 750 | 750 | 750 | 750 | 750 | 750 | 750 | 750 | 750 | 750 | 750 | 750 | 750 | 200 | 100 | 50 | 750 | 750 | 750 | 750 | 750 | 750 | 750 | 100 |
| Second and third resin layers — Blending — Resin — Type | - | - | - | - | - | - | - | - | - | - | - | - | - | - | - | Resin 1 | Resin 1 | Resin 1 | - | - | - | - | - | - | - | Resin 1 |
| Second and third resin layers — Blending — Resin — Amount added | Parts by mass | - | - | - | - | - | - | - | - | - | - | - | - | - | - | 100 | 100 | 100 | - | - | - | - | - | - | - | 100 |
| Second and third resin layers — Blending — Plasticizer — Type | - | - | - | - | - | - | - | - | - | - | - | - | - | - | - | 3GO | 3GO | 3GO | - | - | - | - | - | - | - | 3GO |
| Second and third resin layers — Blending — Plasticizer — Amount added | Parts by mass | - | - | - | - | - | - | - | - | - | - | - | - | - | - | 40 | 40 | 40 | - | - | - | - | - | - | - | 40 |
| Second and third resin layers — Thickness (thickest portion) | μm | - | - | - | - | - | - | - | - | - | - | - | - | - | - | 280 | 340 | 355 | - | - | - | - | - | - | - | 340 |
| Colorant in colored region (total thickness) | % by mass | 0.100 | 0.025 | 0.120 | 0.050 | 0.005 | 0.040 | 0.200 | 0.100 | 0.060 | 0.007 | 0.070 | 0.040 | 0.080 | 0.005 | 0.060 | 0.060 | 0.060 | 0.209 | 0.213 | 0.005 | 0.020 | 0.030 | 0.050 | 0.080 | 0.019 |
| Optical indices — Colored region — Tv | % | 8.2 | 45.0 | 2.3 | 20.0 | 76.0 | 48.0 | 11.6 | 12.2 | 30.7 | 77.4 | 22.0 | 18.0 | 3.7 | 72.3 | 30.7 | 30.8 | 30.9 | 9.1 | 12.1 | 70.8 | 36.6 | 23.6 | 9.8 | 2.7 | 36.6 |
| Optical indices — Colored region — L* | - | 34.4 | 73.5 | 17.1 | 51.1 | 89.8 | 74.7 | 40.2 | 41.5 | 62.3 | 90.6 | 55.7 | 49.2 | 21.3 | 87.9 | 62.0 | 62.1 | 62.3 | 34.3 | 40.9 | 87.1 | 66.0 | 54.4 | 36.0 | 17.1 | 66.0 |
| Optical indices — Colored region — a* | - | -0.9 | -1.1 | 1.5 | 0.2 | -2.1 | -1.9 | -0.9 | -1.3 | -1.7 | -2.3 | -1.5 | -1.4 | 0.6 | -2.7 | -1.7 | -1.8 | -1.9 | 10.8 | -4.2 | -1.6 | 0.6 | 1.8 | 3.5 | 4.8 | 0.5 |
| Optical indices — Colored region — b* | - | 0.5 | 0.9 | 7.2 | 7.3 | 3.7 | 4.9 | 6.5 | 1.8 | 2.3 | 2.9 | 2.2 | 4.2 | 4.0 | 3.4 | 2.3 | 2.4 | 2.3 | 8.0 | 13.2 | 5.0 | 12.1 | 14.5 | 15.4 | 15.5 | 12.1 |
| Optical indices — Colored region — Saturation C | - | 1.0 | 1.4 | 7.4 | 7.3 | 4.3 | 5.3 | 6.6 | 2.2 | 2.9 | 3.7 | 2.7 | 4.4 | 4.1 | 4.3 | 2.9 | 3.0 | 3.0 | 13.5 | 13.9 | 5.2 | 12.1 | 14.6 | 15.8 | 16.3 | 12.1 |
| Optical indices — Colored region — Tts | % | 31 | 54 | 29.5 | 41.4 | 73.7 | 59.5 | 37.4 | 33.3 | 44.7 | 73.6 | 39.5 | 35.2 | 28.3 | 68.8 | 44.6 | 44.8 | 44.8 | 32.3 | 33.0 | 73.6 | 54.2 | 46.9 | 38.2 | 33.5 | 54.0 |
| Optical indices — Non-colored region — Tv | - | - | - | - | - | - | - | - | - | - | - | - | - | - | - | - | 88.5 | - | - | - | - | - | - | - | - | 88.5 |
| Optical indices — Non-colored region — L* | - | - | - | - | - | - | - | - | - | - | - | - | - | - | - | - | 95.5 | - | - | - | - | - | - | - | - | 95.5 |
| Optical indices — Non-colored region — a* | - | - | - | - | - | - | - | - | - | - | - | - | - | - | - | - | -1.6 | - | - | - | - | - | - | - | - | -1.6 |
| Optical indices — Non-colored region — b* | - | - | - | - | - | - | - | - | - | - | - | - | - | - | - | - | 1.3 | - | - | - | - | - | - | - | - | 1.3 |
| Optical indices — Non-colored region — Saturation C | - | - | - | - | - | - | - | - | - | - | - | - | - | - | - | - | 2.1 | - | - | - | - | - | - | - | - | 2.1 |
| Optical indices — Non-colored region — Tts | % | - | - | - | - | - | - | - | - | - | - | - | - | - | - | - | 80.4 | - | - | - | - | - | - | - | - | 80.4 |
| Evaluation — Cloudiness | | D | D | C | C | B | B | C | C | C | B | B | B | B | A | C | C | C | C | C | A | B | B | B | C | B |

[0217] * In Table 1, the content of the colorant in the colored region is a proportion based on the total thickness of the interlayer film. The colorant refers to a graphene-based material for Examples 1 to 17, the total of a graphene-based material and another colorant for Examples 18 and 19, and carbon black for the Comparative Examples.
* CG in Table 1 means clear glass. The particle diameter means an average particle diameter.

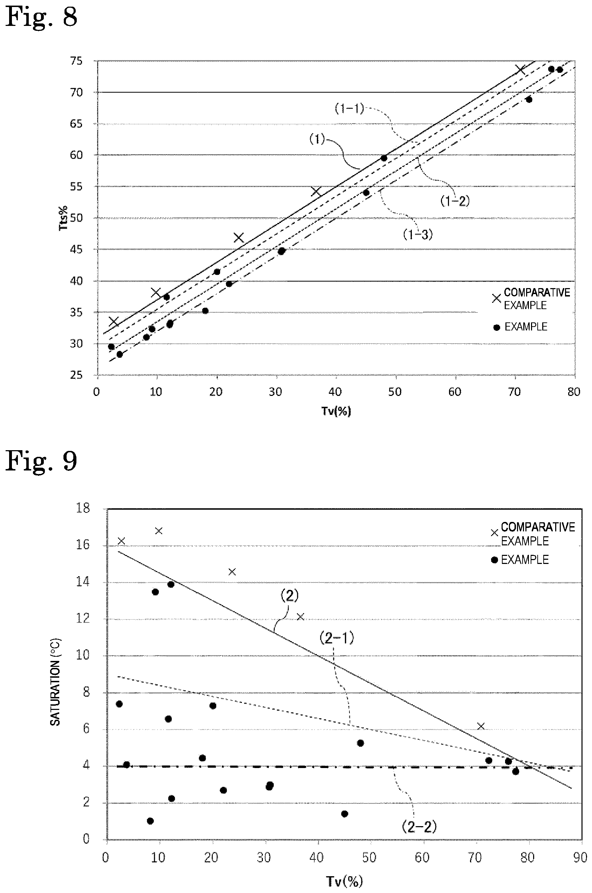

As shown in Fig. 8, it can be understood that the interlayer films and laminated glass of Examples 1 to 19 containing a graphene-based material had low total solar transmittance (Tts) and improved heat shielding properties, compared with the Comparative Examples using carbon black instead of a graphene-based material and having the same level of visible light transmittance. As is clear from Fig. 8, Examples 1 to 19 all satisfied the requirement shown in the formula (1).

As shown in Fig. 9, it can be understood that the interlayer films and laminated glass of Examples 1 to 19 had low saturation (C) and improved designability, compared with the Comparative Examples having the same level of visible light transmittance. As is clear from Fig. 9, Examples 1 to 19 all satisfied the requirement shown in the formula (2).

Reference Signs List

10 interlayer film
11 first layer
12 second layer
13 third layer
14 fourth layer
15 fifth layer
21 first region
22 second region
21A thickest portion
21X region in which thickness is fixed
21Y gradation region

Claims

1. An interlayer film for laminated glass comprising at least one graphene-based material selected from the group consisting of graphene and graphite.

23

2. The interlayer film for laminated glass according to claim 1, wherein an average particle diameter of the graphene-based material is 40 $\mu$m or less.

3. The interlayer film for laminated glass according to claim 1 or 2, wherein a thickness of the graphene-based material is 1 $\mu$m or less.

4. The interlayer film for laminated glass according to any one of claims 1 to 3, wherein a degree of oxidation of the graphene-based material is 50% or less.

5. The interlayer film for laminated glass according to any one of claims 1 to 4, wherein a content of the graphene-based material is 0.0005% by mass or more and 1% by mass or less.

6. The interlayer film for laminated glass according to any one of claims 1 to 5, comprising a colored resin layer comprising a resin and the graphene-based material.

7. The interlayer film for laminated glass according to claim 6, wherein the colored resin layer comprises a polyvinyl acetal resin as the resin.

8. The interlayer film for laminated glass according to claim 6 or 7, comprising a first resin layer, a second resin layer provided on one surface side of the first resin layer, and a third resin layer provided on the other surface side of the first resin layer, wherein
the first resin layer is the colored resin layer.

9. The interlayer film for laminated glass according to any one of claims 1 to 8, wherein total solar transmittance (Tts) and visible light transmittance (Tv) measured for laminated glass satisfy the following formula (1), the laminated glass being made by adhering two clear glass plates, each having a thickness of 2.5 mm and having a visible light transmittance of 90.5%, a solar transmittance of 87.3%, and a solar reflectance of 8.3% as measured in accordance with JIS R 3106: 1998, to each other via the interlayer film for laminated glass disposed between the two clear glass plates:

$$(Tts - 31)/Tv < 0.6 \quad (1)$$

10. The interlayer film for laminated glass according to any one of claims 1 to 9, wherein saturation (C) and visible light transmittance (Tv) measured for laminated glass satisfy the following formula (2), the laminated glass being made by adhering two clear glass plates, each having a thickness of 2.5 mm and having a visible light transmittance of 90.5% as measured in accordance with JIS R 3106: 1998 and a saturation of 0.6 as measured in accordance with JIS Z 8781, to each other via the interlayer film for laminated glass disposed between the two clear glass plates:

$$(C - 16)/Tv < -0.15 \quad (2)$$

11. Laminated glass comprising the interlayer film for laminated glass according to any one of claims 1 to 10 and two glass plates, wherein
the interlayer film for laminated glass is disposed between the two glass plates.

Fig. 1

Fig. 2

Fig. 3

Fig. 4

Fig. 5

Fig. 6

Fig. 7

Fig. 8

Fig. 9

**INTERNATIONAL SEARCH REPORT**

| | International application No. |
|---|---|
| | PCT/JP2021/013701 |

**A. CLASSIFICATION OF SUBJECT MATTER**
C03C 27/12(2006.01)i; B32B 27/30(2006.01)i; C09J 11/04(2006.01)i; C09J 129/14(2006.01)i
FI: C03C27/12 N; C03C27/12 D; B32B27/30 102; C09J11/04; C09J129/14

According to International Patent Classification (IPC) or to both national classification and IPC

**B. FIELDS SEARCHED**

Minimum documentation searched (classification system followed by classification symbols)
C03C27/12; B32B27/30; C09J11/04; C09J129/14

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2020/040115 A1 (SEKISUI CHEMICAL CO., LTD.) 27 February 2020 (2020-02-27) claims, paragraphs [0260]-[0286] | 1-3, 6-8, 11<br>4-5, 9-10 |
| X<br>A | WO 2020/040114 A1 (SEKISUI CHEMICAL CO., LTD.) 27 February 2020 (2020-02-27) claims, paragraphs [0244]-[0270] | 1-3, 6-8, 11<br>4-5, 9-10 |
| X | JP 2016-069259 A (SEKISUI CHEMICAL CO., LTD.) 09 May 2016 (2016-05-09) claims, paragraphs [0055]-[0062] | 1, 11 |
| X | JP 2017-181915 A (HITACHI MAXELL, LTD.) 05 October 2017 (2017-10-05) claims, paragraph [0037] | 1, 11 |
| X | JP 2019-073408 A (AGC INC.) 16 May 2019 (2019-05-16) claims, paragraph [0036] | 1, 11 |

☐ Further documents are listed in the continuation of Box C. ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 June 2021 (14.06.2021) | 22 June 2021 (22.06.2021) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

| | International application No. |
|---|---|
| | PCT/JP2021/013701 |

| Patent Documents referred in the Report | Publication Date | Patent Family | Publication Date |
|---|---|---|---|
| WO 2020/040115 A1 | 27 Feb. 2020 | (Family: none) | |
| WO 2020/040114 A1 | 27 Feb. 2020 | (Family: none) | |
| JP 2016-069259 A | 09 May 2016 | (Family: none) | |
| JP 2017-181915 A | 05 Oct. 2017 | (Family: none) | |
| JP 2019-073408 A | 16 May 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012218972 A

- WO 2014034156 A

**Non-patent literature cited in the description**

- *CHEMICAL ABSTRACTS,* 4948-15-6

- *CHEMICAL ABSTRACTS,* 13676-91-0